# EUROPEAN PATENT APPLICATION

(11) **EP 4 814 499 A1**
(43) Date of publication of application: **30.09.2026**
(21) Application number: 26163602.1
(22) Date of filing: 10.03.2026
(51) Int. Cl.: G01P 21/02, G01P 5/16

(54) **METHODS AND APPARATUS TO CHARACTERIZE PRESSURE EFFECTS BASED ON PAYLOAD**

(30) Priority: 28.03.2025 US 202519094665
(71) Applicant: Insitu, Inc. (a Subsidiary Of The Boeing Company), Arlington Virginia 22202 (US)
(72) Inventor: RYSDYK, Rolf Theodoor, Arlington, 22202 (US); PLOEGER, Mark Kleczewski, Arlington, 22202 (US)
(74) Representative: St Clair Jones, Gregory Arthur Langley

(57) **Abstract**

Methods and apparatus to characterize pressure effects based on payload are disclosed. A disclosed example apparatus includes interface circuitry communicatively coupled to a sensor carried by an aircraft, machine-readable instructions, and at least one processor circuit to be programmed by the machine-readable instructions to determine at least one of a configuration or an orientation of a payload, determine a pressure based on output from the sensor, determine an airspeed error based on: (i) the at least one of the configuration or the orientation, and (ii) the pressure, and determine an airspeed of the aircraft based on the airspeed error.

## Description

### FIELD OF THE DISCLOSURE

This disclosure relates generally to aircraft and, more particularly, to methods and apparatus to characterize pressure effects based on payload.

### BACKGROUND

Typically, aircraft rely on the air-data system to protect their flight envelope, schedule stability and control parameters to ensure maximum endurance, as well as energy management during launch and recovery procedures. Therefore, proper airdata calibration is critical to mission performance. In long endurance emissions, accurate airspeed estimation and regulation is vital to ensure requisite efficiency.

### SUMMARY

An example apparatus includes interface circuitry communicatively coupled to a sensor carried by an aircraft, machine-readable instructions, and at least one processor circuit to be programmed by the machine-readable instructions to determine at least one of a configuration or an orientation of a payload, determine a pressure based on output from the sensor, determine an airspeed error based on: (i) the at least one of the configuration or the orientation, and (ii) the pressure, and determine an airspeed of the aircraft based on the airspeed error.

An example of at least one (optionally non-transitory) machine-readable medium includes machine-readable instructions to cause at least one processor circuit to at least determine at least one of a configuration or an orientation of a payload carried by an aircraft, determine a pressure based on output from a sensor of the aircraft, determine an airspeed error based on: (i) the at least one of the configuration or the orientation, and (ii) the pressure, and determine an airspeed of the aircraft based on the airspeed error.

An example method includes determining, by one or more of at least one processor circuit, at least one of a configuration or an orientation of a payload carried by an aircraft, determining, by one or more of the at least one processor circuit, a pressure based on output from a sensor of the aircraft, determining, by one or more of the at least one processor circuit, an airspeed error based on: (i) the at least one of the configuration or the orientation, and (ii) the pressure, determining, by one or more of the at least one processor circuit, an airspeed of the aircraft based on the airspeed error, and directing, by one or more of the at least one processor circuit, movement of the aircraft based on the airspeed.

### BRIEF DESCRIPTION OF THE DRAWINGS

FIG. 1 illustrates an example aircraft in which examples disclosed herein can be implemented.
FIG. 2 illustrates an example pressure distribution.
FIG. 3 is an example process flow in accordance with teachings of this disclosure.
FIG. 4 illustrates example results of a quality check.
FIG. 5 illustrates an example variation of a pressure scaling ratio.
FIG. 6 is an example process flow that can be implemented in examples disclosed herein.
FIG. 7 illustrates an example air density estimate.
FIGS. 8-10 illustrate aspects of wind estimation that can be implemented in examples disclosed herein.
FIG. 11 illustrates an example geometric representation of an orbit methodology that can be implemented in examples disclosed herein.
FIG. 12 is an example process flow that can be implemented in examples disclosed herein.
FIGS. 13-18 depict example results that can be achieved by examples disclosed herein.
FIG. 19 is a block diagram of an example payload analysis system that can be implemented in examples disclosed herein.
FIGS. 20 and 21 are flowcharts representative of example machine readable instructions and/or example operations that may be executed, instantiated, and/or performed by example programmable circuitry to implement the payload analysis system of FIG. 19.
FIG. 22 is a block diagram of an example processing platform including programmable circuitry structured to execute, instantiate, and/or perform the example machine readable instructions and/or perform the example operations of FIGS. 20 and 21 to implement the payload analysis system of FIG. 19.
FIG. 23 is a block diagram of an example implementation of the programmable circuitry of FIG. 22.
FIG. 24 is a block diagram of another example implementation of the programmable circuitry of FIG. 22.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

Methods and apparatus to characterize pressure effects based on payload are disclosed. Methods for pitot-static system calibration are well established in aviation. Traditional calibration exercises can have a significant cost due to design considerations, a wind tunnel campaign, and/or carefully piloted flight at many altitudes on calm days with a significant number of repetitions, as well as relatively expensive dedicated equipment. However, on relatively smaller aircraft, such as unmanned aerial vehicles (UAVs), these known methods are not practical and can be costly. For example, small intelligence surveillance and reconnaissance (ISR) aircraft can be deployed with a large variety of different payloads on a nose section of an aircraft. This often entails different pitot-static systems with static ports exposed to variations in pressure distribution.

The calibration process for relatively small UAVs is also challenged by a lack of accurate heading information. As will be demonstrated, estimation of heading bias or side-slip is possible, but can be adversely affected by a non-uniformity of a windshield, for example. Global navigation satellite system (GNSS) signals, such as global position system (GPS) signals, may be used for airdata calibration and pragmatic methods are readily found in professional societies and aviation forums alike. GNSS can include, but is not limited to, GPS, Galileo, BeiDou, GLONASS, etc. Early geometric methods favored relatively easy computation and closed form solutions, but such implementations came at the price of high sensitivity to empirical errors, reliance on strong assumptions, and lack of accuracy unless the proposed methods are repeated a significant number of times. A more categorical evaluation with modern optimization techniques is applied in examples disclosed herein that utilize an ORBIS-matching method that reduces a statistical error inherent in the three-point empirical approaches. Depending on sophistication of data acquisition tools and the ability to tailor the flight maneuvers, known GNSS/GPS velocity-based methods can be comparable to known calibration methods.

GNSS/GPS velocity can also be processed and used for airdata calibration using a non-linear kinematics-only Kalman filter (KF) for data-fusion. Similar to the averaging techniques in least squares (LSQ) minimization, the telemetry is collected from flight and is processed for both estimation of wind and calibration of airspeed, which are inherently coupled through a 'wind-triangle.' The similarity of the KF-based approach with the LSQ methods is determined by the use of kinematics alone (generally referred to as 'model-free') in contrast to reliance on sophisticated parametric models and direct measurement of aerodynamic angles. Additional methods have been demonstrated in academic settings, but these techniques are generally not pragmatic for the purposes of calibration aimed at enabling robust small UAV with multiple configurations.

Examples disclosed herein operate to accurately adjust an airspeed (e.g., an indicated airspeed) to mitigate the effects of a payload that would otherwise negatively impact such readings. In other words, examples disclosed herein can effectively calibrate measurements of an aircraft. Examples disclosed herein utilize kinematics, GNSS/GPS-velocity information, airdata measurements, and heading information if available. As such, examples disclosed herein can be regarded as 'model-free' and, thus, applicable to any appropriate type of aircraft, such as fixed-wing aircraft, for example. Examples disclosed herein can address the following: (1) a measured airspeed containing an error due to the static source disruption; (2) a measured heading containing errors from electromagnetic interference (EMI), (3) windspeed and direction being unknown, and (4) a ground speed and a course are obtained from GPS or GNSS signals. Examples disclosed herein can enable calibration capable of correcting indicated airspeed to within ± 0.5 meters per second (m/s), for example.

Examples disclosed herein enable effective determination of an airspeed error with respect to at least one of a configuration or an orientation of a payload of an aircraft. Examples disclosed herein can determine the airspeed error based on a pressure measured by a sensor of the aircraft in conjunction with at least one of a configuration or an orientation of the payload. In other words, examples disclosed herein can determine a corrected and/or calibrated airspeed of the aircraft based on a measured pressure (or other parameter related to pressure) in combination with the configuration and/or the orientation of the payload. As a result, examples disclosed herein can accurately control an airspeed of the aircraft as well as motion of the aircraft (e.g., an orbiting motion of the aircraft). By accurately controlling airspeed, examples disclosed herein can more efficiently control movement of the aircraft, thereby enabling increased range thereof. Further, examples disclosed herein enable accurate mitigation of the effects of wind.

In some examples, the payload is moved between orientations (e.g., first and second orientations) while measuring flight sensor information. In turn, the flight sensor information is utilized with GNSS data to determine the airspeed error. In other words, airspeed measurements of the aircraft can be calibrated based on a configuration and/or an orientation of the payload. In particular, a table or a database of the configuration and/or the orientation can be generated for in-flight lookup to correct airspeed. For example, different orientations of the payload can be characterized with respect to effects of the airspeed measurements. In some examples, the airspeed error is determined based on heading data. Additionally or alternatively, the pressure is determined based on outside air temperature (OAT) and barometric pressure. In some examples, the airspeed error corresponds to a database that relates at least one of the configuration or the orientation of the payload to a corresponding pressure coefficient. In some examples, the determination of at least one of the configuration or the orientation of the payload occurs in response to determining that a change in pressure distribution of the aircraft has exceeded a threshold degree of change in pressure distribution and/or a presence of an airflow disruption. In some examples, the aircraft is guided along an orbit of a target based on the airspeed error and/or a corrected/adjusted airspeed that is based on the airspeed error.

The nomenclature and terms used herein are below:

**Table 1. Nomenclature**

| Symbol | Interpretation |
|---|---|
| *a*₀ | Speed of sound in standard atmosphere (SA) |
| *̅V̅*̅ | Velocity vector |
| {*V_{g,N}, V_{g,E}*} | Inertial speed components North, East |
| {*W_{N}, W_{E}*} | Wind velocity components North, East |
| *V_{w}* | Wind-speed |
| *Cₚ* | *P_{dyn}* scaling coefficient |
| *g* | Gravitational constant |
| *hₚ* | Pressure altitude |
| *h_{baro}* | Barometric altitude |
| *k*₀*, k*₁*, k*₂ | Polynomial coefficients |
| M | Mach number |
| *P,* Q, *R* | Covariance matrices (in context) |
| P | Pressure |
| *Pₐ* | Ambient (or static) pressure |
| *Pₒ* | SA Pressure at 0 mean sea level (MSL) |
| *Pₜ* | Total (or stagnation) pressure |
| *Pₛₑₜ* | Altimeter setting |
| *P_{dyn}* | Dynamic pressure |
| r | Radius |
| *R* | Universal gas constant |
| *T* | Outside air temperature |
| *Tₒ* | SA Temperature at 0 MSL |
| *Vₐ* or *V*_{TAS} | True airspeed |
| *V*_{IAS} | Indicated airspeed |
| Δ*V_{ψ}* | Error component perpendicular to *V̅ₐ* |
| Δ*_{H}* | Kollsman correction (as height) |
| Δ*_{T}* | Kelvin to degrees Celsius conversion |
| *ρ* | Air density |
| *ρₒ* | SA air density at 0 MSL |
| *α* | Angle of attack |
| *β* | Side-slip angle |
| *γ* | Specific heat ratio of dry air |
| *γₐ* | Air-relative flight path angle |
| *γ_{w}* | Wind 'from' direction |
| *κ* | Gain parameter |
| *λ* | Temperature lapse rate |
| *δ* | Pressure ratio |
| *σ* | Air density ratio |
| *σₓ* | Standard deviation of signal *x* |
| Θ | Temperature ratio |
| *ϕ* | Bank angle |
| *ψ* | Heading angle |
| *χ* | Course |
| *v* | White noise source |

**Table 2. Notation**

| Notation | Interpretation |
|---|---|
| *x̃* | Measured value of *x* |
| *x̂* | Estimated or calculated value of *x* |
| *x** | Truth value of *x* |
| Δ*x* | Measurement or estimation error in signal *x* |

**Table 3. Acronyms**

| Acronym | Interpretation |
|---|---|
| APD | Autopilot device |
| CoTS | Readily available commercial off-the-shelf |
| EKF | Extended Kalman filter |
| GPS | Satellite-based Global Positioning System |
| IAS | Indicated airspeed |
| LSQ | Ordinary Least squares method |
| MSL | Mean sea level |
| OAT | Outside air temperature |
| Orbit 1 | Telemetry from two orbits about Waypoint 1. |
| PEC | Static port position error correction |
| QC | Quality control |
| SA | Standard atmosphere |
| TAS | True airspeed |
| UAS | Uncrewed Aircraft System |

Nomenclature as used herein is described. It is significant to note that GNSS/GPS-based velocity is based on Doppler effects and velocity accuracy is on the order of centimeters per second (cm/s). Where values are noted, SI units are utilized and aviation protocol with units as indicated. Examples disclosed herein are described in the context of a horizontal plane. When vectors are expressed in component form the subscript indicates their frame of reference. Accordingly, as set forth herein, a local NED frame is taken to be an inertial frame and vector derivatives with respect to time are taken with respect to this frame. In reference to an indicated airspeed and a true airspeed, a calibration can be explicit with measurement and error definitions.
As set forth herein, measurement models are defined as: ${x}^{˜} = {x}^{∗} + Δ x$ , where *x̃* is a measured value, *x** is a truth value (generally unknown) and Δ*x* is the error. Similarly, model estimated or computed values are denoted as follows: $\hat{x} = {x}^{∗} + Δ x$

The pitot-static airdata system is typically well characterized in known solutions. Airspeed is determined from the difference between total (or 'stagnation') and ambient (or 'static') pressure, and pressure altitude is determined using the latter. The airdata system error consists of position error and instrument error. Static-ports specifically are affected by their position on the vehicle which requires calibration or tuning and therefore this process is often referred to as position error correction. For smaller UAVs this calibration may be approached using GNSS or other positioning systems like GPS, for example, as discussed below.

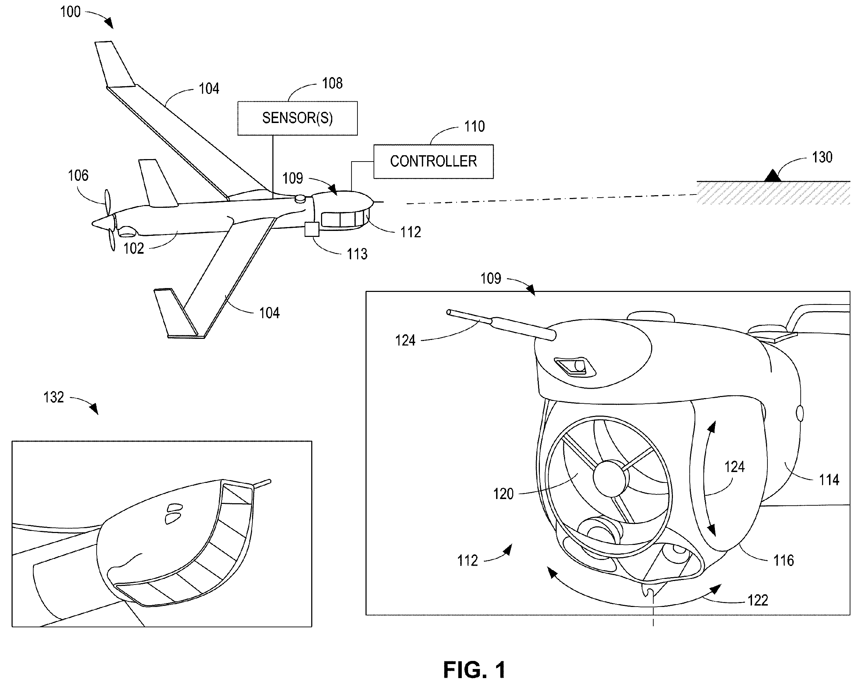

FIG. 1 illustrates an example aircraft 100 in which examples disclosed herein can be implemented. The aircraft 100 of the illustrated example is a fixed wing aircraft, and includes a fuselage 102, wings 104, a propulsion device 106, at least one flight sensor 108, a nose section 109, and a controller (e.g., a flight controller) 110. In turn, the example nose section 109 supports a payload 112, which is implemented as an image sensor (e.g., a camera) in this example. The example payload 112 can be moved and/or oriented by an aiming device (e.g., a gimbal) 113.

In the illustrated example of FIG. 1, a detailed view of the example nose section 109 is depicted. In this example, a fuselage portion 114 supports the aiming device 113 having a housing (e.g., a movable housing, a rotatable housing, etc.) 116 which, in turn, positions and/or orients the payload 112. Further, the example payload 112 includes a sensing portion (e.g., a camera lens, an image sensing portion, etc.) 120. In this example, the housing 116 can be moved, oriented and/or rotated relative to the fuselage portion 114. While an image sensor is implemented in this example, any appropriate other type of sensor can be utilized instead (e.g., an acoustic sensor, a thermal sensor, a magnetic sensor, etc.).

In some examples, to track a target 130 as the aircraft 100 is in flight, the sensing portion 120 of the payload 112 is oriented and/or directed via the aiming device 113. According to examples disclosed herein, the aiming device 113 can be rotated in multiple degrees of freedom, as generally indicated by arrows 122, 124 to track the target 130, such as a ground-based target or a ship, for example. Accordingly, the aiming device 113 can move the payload 112 to track the target while the aircraft 100 is moved in an orbit and/or orbiting motion relative thereto.

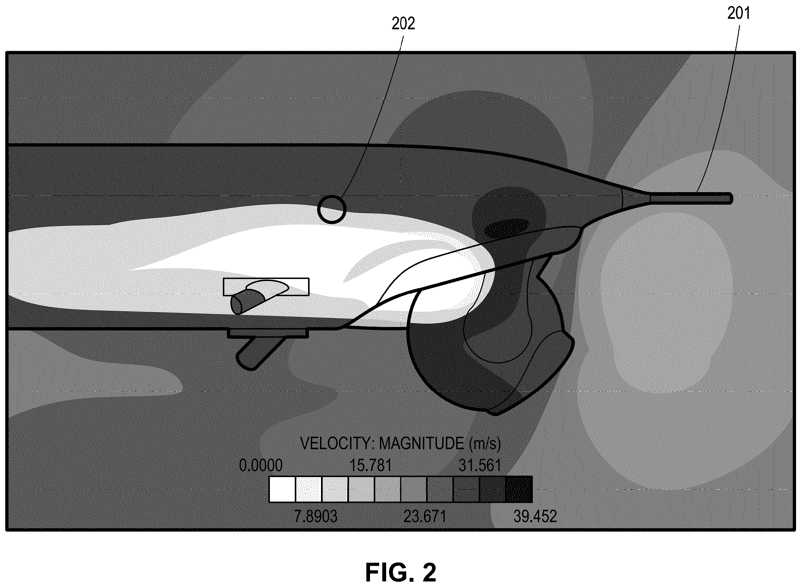

As will be discussed in greater detail below in connection with FIGS. 2-21, examples disclosed herein utilize a configuration and/or orientations of the payload 112 to calibrate airspeed measurements corresponding to the aircraft 100. Examples disclosed herein can calibrate and/or correct airspeed measurements based on the payload 112 configuration and/or orientation in conjunction with measuring flight sensor information. The flight sensor information can include, but is not limited to, measured airspeed, static pressure, barometric pressure, OAT, etc. In some examples, the flight sensor information can be utilized in conjunction with GNSS data to determine airspeed errors that are related to different orientations of the payload 112. As a result, the airspeed error is utilized to correct measured airspeed based on an orientation of the payload 112 when the aircraft 100 is in flight.

Additionally or alternatively, examples disclosed herein can also account for different payload types and/or implementations. For example, examples disclosed herein can determine airspeed error for when a different payload, such as a payload 132 shown in FIG. 1, is utilized instead of the payload 112 (e.g., the payload 112 and the payload 132 are interchangeable and/or swappable). In other words, examples disclosed herein can characterize different payload implementations for airspeed determination.

FIG. 2 illustrates an example pressure distribution. In the illustrated view of FIG. 2, a computational fluid dynamics (CFD) rendition of pressure distribution in a vertical plane at a fuselage of an aircraft with a pitot-tube 201 is shown. Accordingly, a payload configuration and/or payload displacement/orientation affects the pressure distribution at or proximate a static port, as indicated by a circle 202. Variations in pressure distribution at the static port can cause variations of indicated airspeed errors. In other words, a variation in a payload configuration and/or payload displacement can cause significant pressure variations, thereby causing inaccurate airspeed measurements which, in turn, may result in inaccurate control of the aircraft.

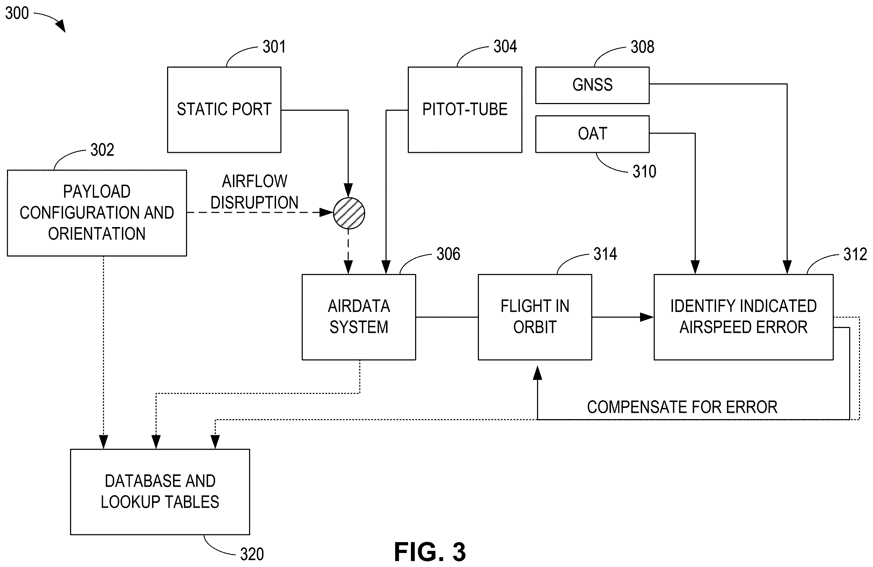

FIG. 3 is an example process flow 300 in accordance with teachings of this disclosure. The example process flow 300 can advantageously determine relationships between payload configuration and/or orientation with respect to flight information (e.g., flight sensor information), thereby enabling airspeed correction. Examples disclosed herein can be applied to protect a flight envelope, as well as increase an endurance or a range of a small aircraft or uncrewed aerial system (UAS) with various payloads without requiring detailed aircraft parameters.

To mitigate the effects of an external nose-mounted payload disrupting a proper measurement of airspeed, examples disclosed herein can utilize the following steps: (1) a payload causes a disruption of air flow and hence a change in pressure distribution; (2) The disruption leads to an airdata system reporting an erroneous airspeed, and consequently stabilized flight at an airspeed which is not as commanded; (3) flight at an orbit-waypoint allows identification of the airspeed error, as demonstrated in examples disclosed herein; (4) The identified error can be used to adjust the flight in orbit to match the desired or commanded airspeed, for example, to attain an increased endurance or greater flight range; and (5) the identified error can be combined with airdata and payload configuration parameters to advantageously generate a table and/or a database of known disruptions for subsequent use, system health monitoring, or other predictive purposes.

At block 301, in this example, a pressure (e.g., a dynamic pressure) is measured at a static port of an aircraft (e.g., the aircraft 100). In this example, the static port is located on a fuselage of the aircraft. Additionally or alternatively, the static port is located on an external surface of the aircraft.

In the illustrated example of FIG. 3, at block 302, a payload configuration and/or orientation is determined. According to some examples disclosed herein, the payload configuration and/or orientation can correspond to an airflow disruption (e.g., due to certain orientations of the payload). The payload configuration can correspond to different payloads that can be coupled to the aircraft. Additionally or alternatively, the payload orientation is determined based on gimbal data, for example.

At block 304, according to examples disclosed herein, pressure measurements from a pitot-tube of the aircraft are obtained. In this example, the pitot-tube is utilized to measure static pressure.

At block 306, according to examples disclosed herein, an airdata system utilizes measurements from the static port and the pitot-tube in conjunction with information corresponding to the payload configuration and/or orientation. According to examples disclosed herein, the payload configuration and/or orientation can correspond to an airflow disruption. In some examples, the airdata system utilizes a relationship of a payload configuration and/or an orientation with respect to pressure data, thereby enabling airspeed correction.

At block 308, in this example, GNSS data (e.g., GPS data) is obtained, accessed and/or received. In this example, the GNSS data is obtained to define a 'truth' of position information and/or movement information of the aircraft.

At block 310, an OAT is measured. In this example, the OAT is measured at or proximate an external surface of the aircraft.

At block 312, according to examples disclosed herein, an identified airspeed error is calculated to control a flight of the aircraft in orbit (block 314). In some examples, a compensated error is provided for control of the aircraft in orbit (block 314). In other examples, the aircraft is not in orbit.

At block 320, a database and/or lookup tables is/are defined, generated and/or updated. In this example, the airspeed error, information from the airdata system, and the payload configuration and/or orientation are utilized to generate, update and/or correct the database and lookup tables. In some examples, the database and/or lookup tables are generated and/or updated while an aircraft is in flight such. In other words, the database and/or lookup tables may be updated while an aircraft is in flight with airspeed correction(s) being performed.

According to examples disclosed herein, in a calibration/learning phase, the database and/or lookup tables associated with block 320 are generated. In this example, GNSS data is utilized in combination with payload configuration and/or orientation and pressure measurements corresponding to blocks 301, 304. According to some examples disclosed herein, the relationship(s) between pressure and/or airspeed varying with payload configuration and/or orientation is determined. As mentioned above, in some examples, this calibration/learning phase is performed even during an operational phase (e.g., during an ISR mission).

In accordance with teachings of this disclosure, in an implementation phase, the payload configuration and/or orientation and pressure (e.g., pressure relationship) between the static port and the pitot-tube are utilized to determine an error (e.g., an airspeed error) without necessitating GNSS signals. In turn, the error is utilized to correct a measured parameter, such as an indicated airspeed. As a result, the corrected airspeed can be utilized for advantageous accurate control of the aircraft. In other words, the error can be compensated for. Further, examples disclosed herein can take into account the effects of wind. While examples disclosed herein are described in the context of pressure, any other appropriate parameters can be utilized instead. Further, while examples disclosed herein are described in the context of a fixed wing aircraft, examples disclosed herein can be applied to any other appropriate type of vehicle and/or aircraft.

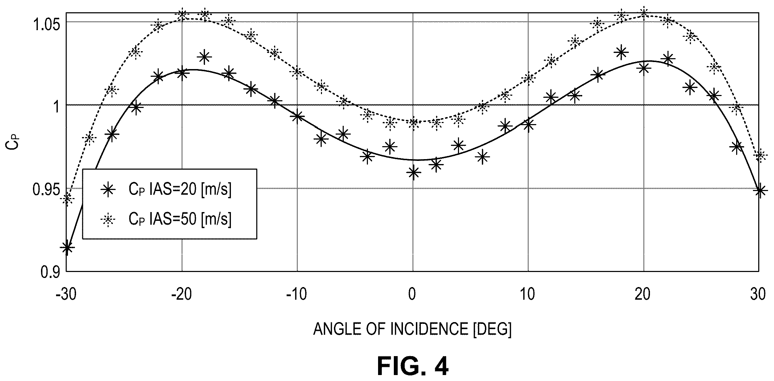

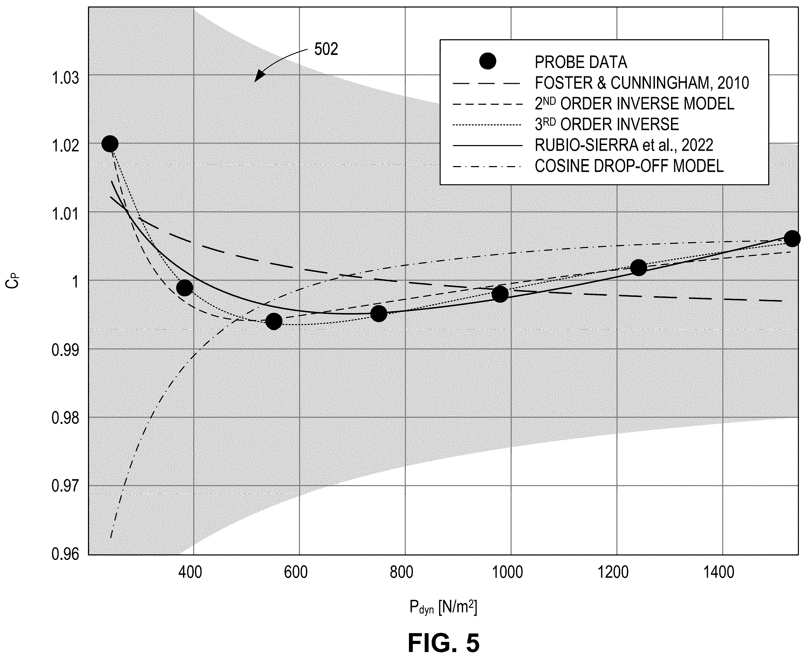

FIG. 4 illustrates example results of a quality check of a typical commercial off-the-shelf (CoTS) pitot-static probe for micro-electromechanical systems (MEMS) based pressure transducers. In the illustrated example of FIG. 4, Cₚ variation with respect to an angle of incidence and speed is depicted. In the illustrated view of FIG. 5, a position error (e.g., an aircraft integration effect) is not taken into account in these results.

FIG. 5 illustrates an example result of variation of a pressure scaling ratio. In particular, the result is from a pitot probe quality check in trimmed flight over a speed-sweep. In the illustrated example of FIG. 5, an (uninstalled) pitot-probe quality control data from FIG. 4 can suggest that a 3rd order inverse model would be more appropriate than the models proposed in known implementations. However, a band 502 indicates a 0.5 meters per second (m/s) error margin, which suggests a linear fit may suffice.

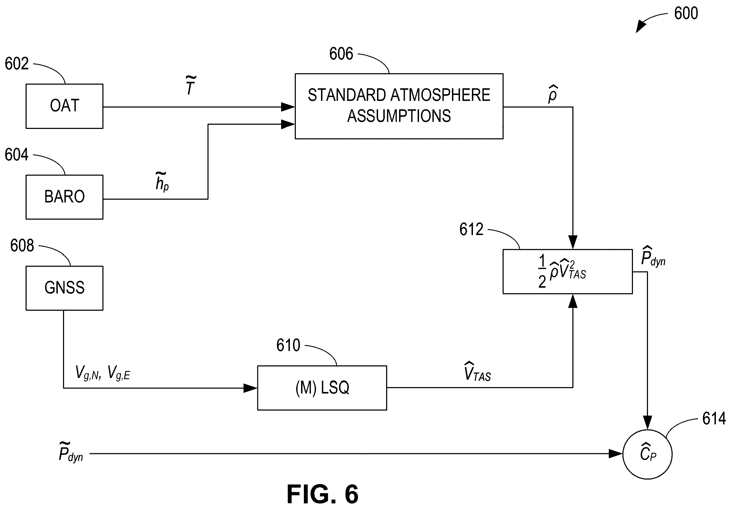

FIG. 6 is an example process flow 600 that can be implemented in examples disclosed herein. The example process 600 of FIG. 6 illustrates example steps to estimate a scaling-factor Cₚ that rely on GNSS signals, such as GPS signals, as 'truth' in conjunction with a standard atmosphere model.

At block 602, in this example, OAT of an aircraft is measured.

At block 604, a barometric pressure of the aircraft is measured, for example.

At block 606, according to examples disclosed herein, standard atmospheric pressure assumptions are applied resulting in a calculated and/or estimated density of air.

At block 608, GNSS data/information (e.g., GPS data) is obtained.

In the illustrated example of FIG 6, at block 610, a true airspeed is calculated utilizing LSQ calculations. For example, the true airspeed is calculated based on the GNSS data.

At block 612, the aforementioned air-density and the true airspeed are utilized to calculate a pressure (e.g., a dynamic pressure, a differential pressure, a static pressure, etc.) of the aircraft.

At block 614, a pressure scaling coefficient is calculated. According to examples disclosed herein, the pressure scaling coefficient is utilized for airspeed correction and/or calibration.

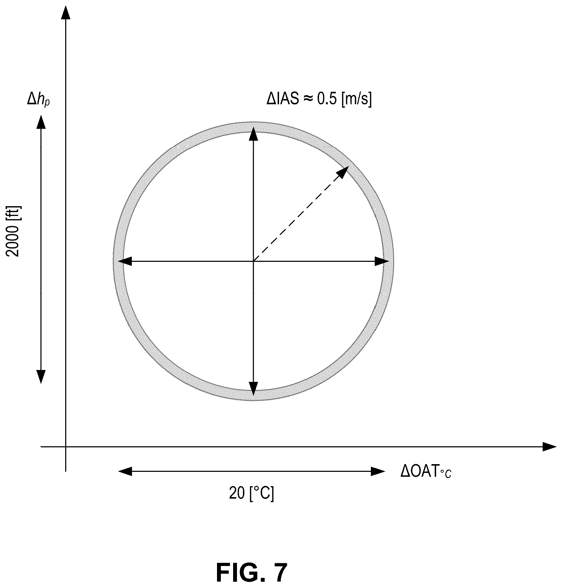

FIG. 7 illustrates an example air-density estimate. In this example, the air-density estimate is relatively insensitive to errors in barometric pressure and OAT. For example, a 0.5 m/s error in indicated air speed (IAS) in example Equation 8 below, can equate to errors in altitude or temperature of respectively ±1000 feet (ft) and ±10 degrees Celsius (°C) at an altitude of 10,000 ft. Actual errors can be expected to be two orders of magnitude less in altitude and with an order of magnitude less in temperature.

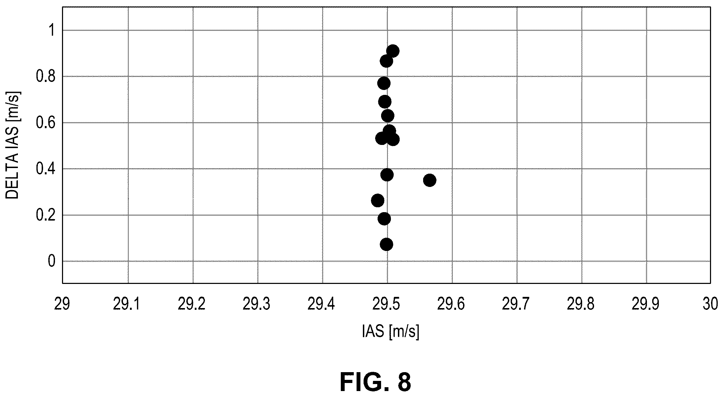

FIGS. 8-10 illustrate aspects of wind estimation that can be implemented in examples disclosed herein. In particular, FIG. 8 illustrates an observed error. In the illustrated view of FIG. 8, the observed error in indicated airspeed shows significant spread across all orbits in a single flight, despite that all depicted data corresponds to aircraft flown at a similar commanded IAS.

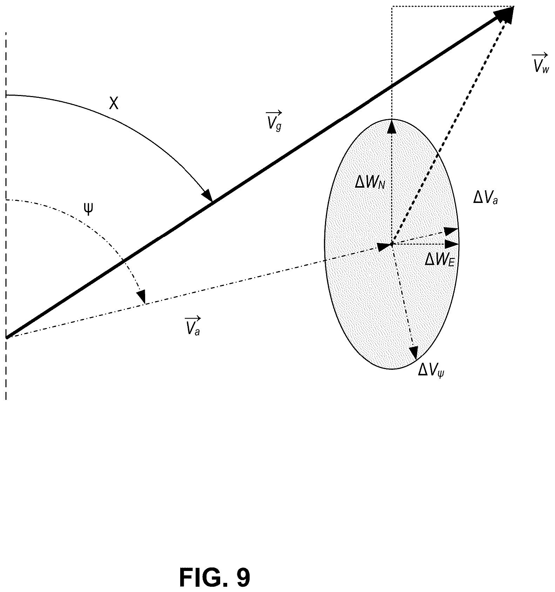

FIG. 9 illustrates wind variation that can vary by location in orbit (e.g., orbit with respect to a target). Wind that varies by location in orbit can result in error-components that can be interpreted as either airspeed and heading or wind components. The uniform wind field assumption can assign all variations to airspeed and heading.

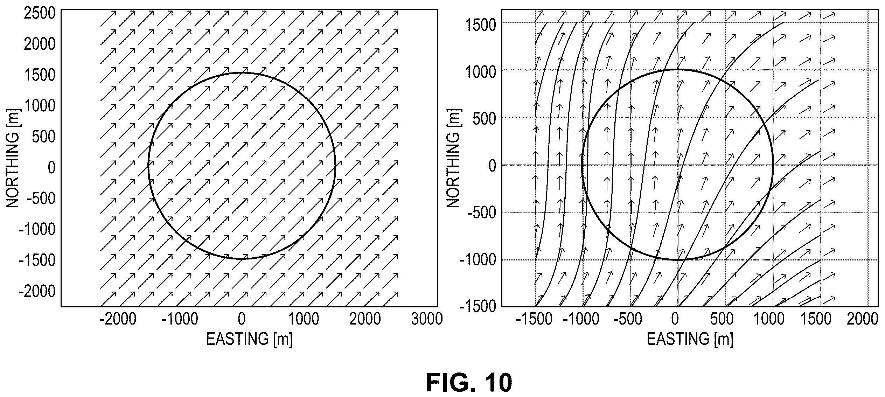

FIG. 10 illustrates example windfields. A constant wind assumption can imply a uniform wind field, as shown on the left in the view of FIG. 10. Depending on geographic terrain and convective activity, the reality may show wind variation that is correlated to location in orbit, as shown in the wind field on the right in the view of FIG. 10.

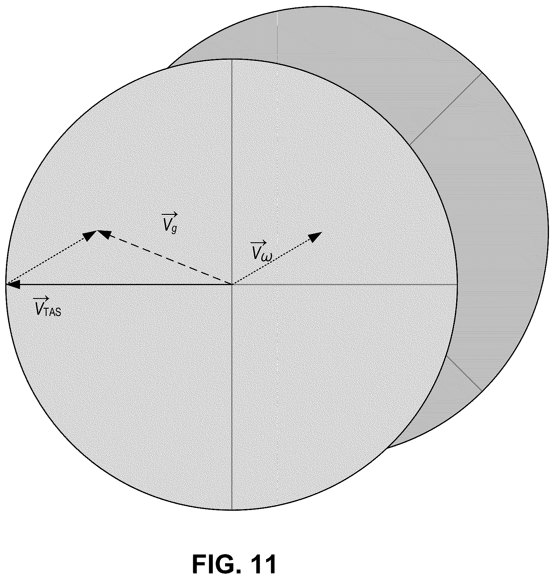

FIG. 11 illustrates an example geometric representation of an orbit methodology that can be implemented in examples disclosed herein. In particular, FIG. 11 illustrates a geometric representation of an 'Airspeed Circle' depicting the averaging method that can be utilized to determine both prevailing wind and nominal airspeed from inertial speed alone.

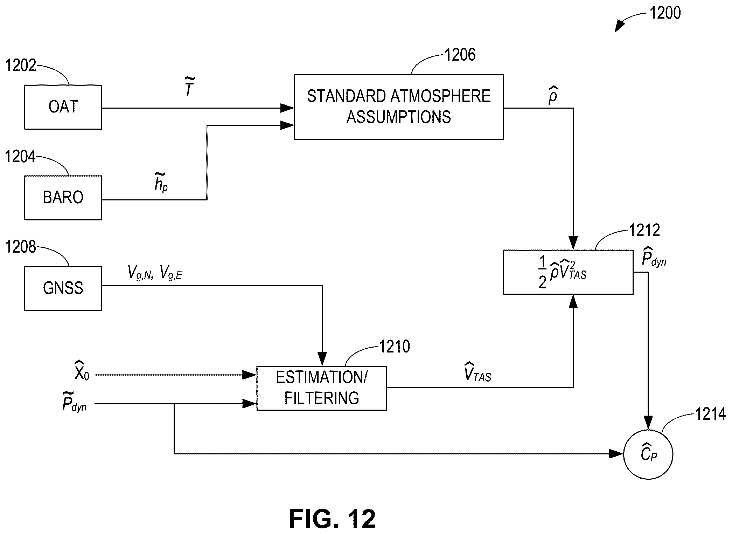

FIG. 12 is an example process flow 1200 that can be implemented in examples disclosed herein. In this example, a substantially real-time inflight estimate of Cₚ utilizes GNSS/GPS signals as independent input ('truth'), a Standard Atmosphere model, and an estimation filter with dynamic pressure as measurement input.

At block 1202, in this example, OAT of an aircraft is measured.

At block 1204, a barometric pressure of the aircraft is measured, for example.

At block 1206, according to examples disclosed herein, standard atmospheric pressure assumptions are applied resulting in a density.

At block 1208, in this example, the GNSS data is obtained and/or accessed.

In the illustrated example of FIG 12, at block 1210, estimation/filtering is utilized to determine a true airspeed based on the GNSS data.

At block 1212, the aforementioned air density and the true airspeed are utilized to calculate a pressure and/or pressure information.

At block 1214, a pressure scaling coefficient is calculated. According to examples disclosed herein, the pressure coefficient/scaling factor is utilized for airspeed correction and/or calibration.

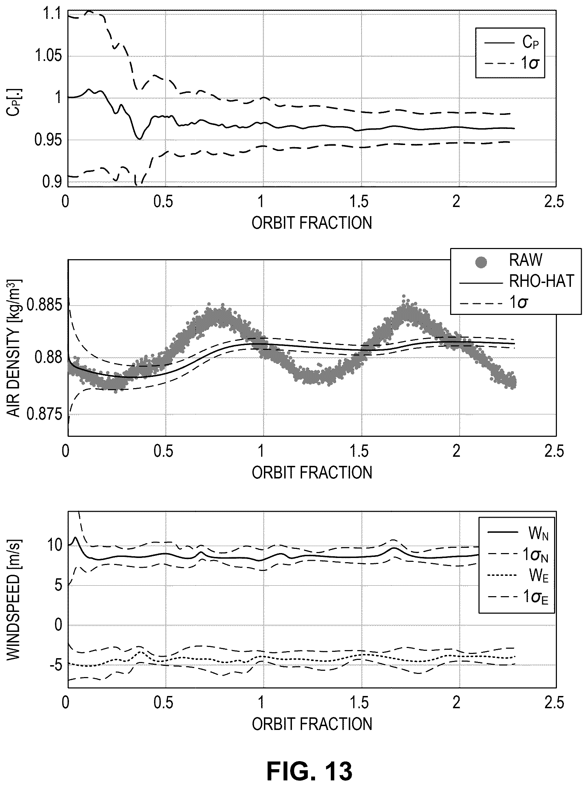

FIGS. 13-18 depict example results that can be achieved by examples disclosed herein. Turning to FIG. 13, careful tuning and a reasonable starting guess can offer relatively advantageous results, such that *σ_{cp} = 1E* - 3, ${σ}_{ρ} = 1 E - 4 \left[\frac{kg}{{m}^{3}},\right] , {σ}_{w} = 1 \left[\frac{m}{s}\right]$.

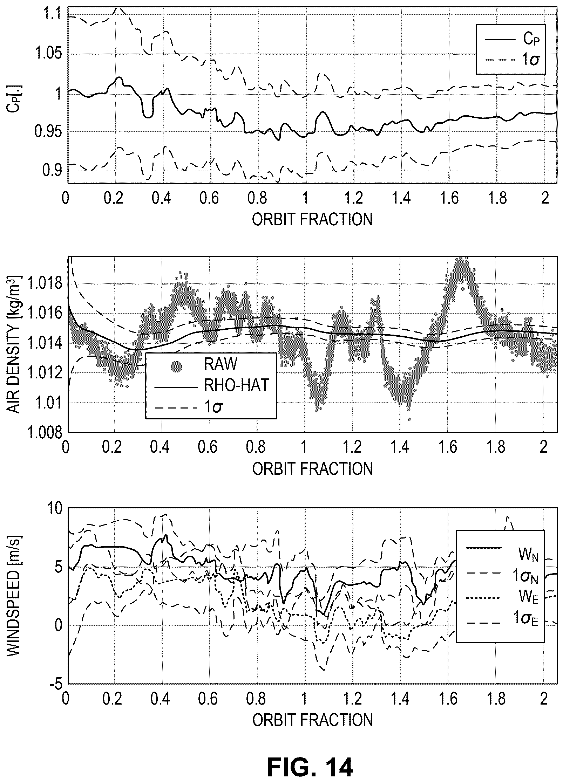

FIG. 14 illustrates example results from a known turbulent orbit. Particularly, FIG. 14 depicts results from a known turbulent orbit at lower altitude, such that: ${σ}_{cp} = 1 E - 3 , {σ}_{ρ} = 1 E - 4 \left[\frac{kg}{{m}^{3}},\right] , {σ}_{w} = 2 \left[\frac{m}{s}\right] .$

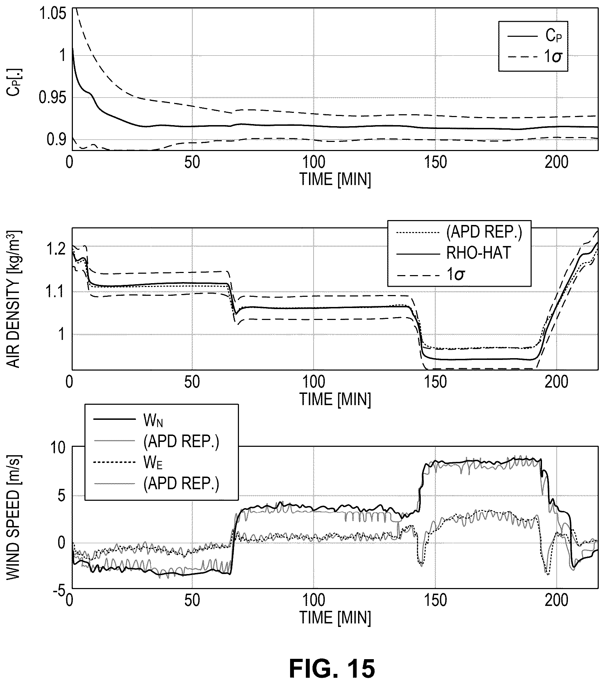

FIG. 15 illustrates example aspects of a pressure coefficient estimation. In particular, a *Cₚ* estimation during the course of a 3 hour flight. Process noise variance on density estimation and wind was inflated to allow for quicker convergence after changes in altitude; such that: $Q = diag \left\{{.01}^{2} {.5}^{2} {30}^{2} {30}^{2}\right\}$

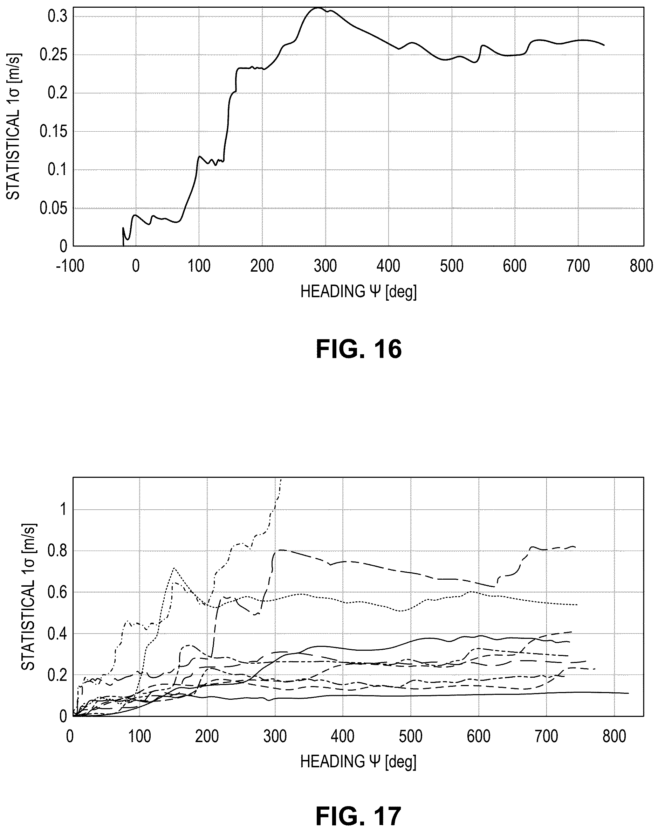

FIG. 16 illustrates example results. In particular, FIG. 16 depicts measurements of airspeed, heading, ground speed, and course are taken at about 30 Hertz (Hz) with a relatively constant commanded airspeed of approximately 34 m/s. The variance of the data settles after approximately one orbit and a half, as reflected in an iterative tally of the standard deviation.

FIG. 17 illustrates example variance. As can be seen in FIG. 17, one outlier notwithstanding, the variance of the data settles generally after about one orbit, as reflected in the depicted standard deviation traces for ten different orbits.

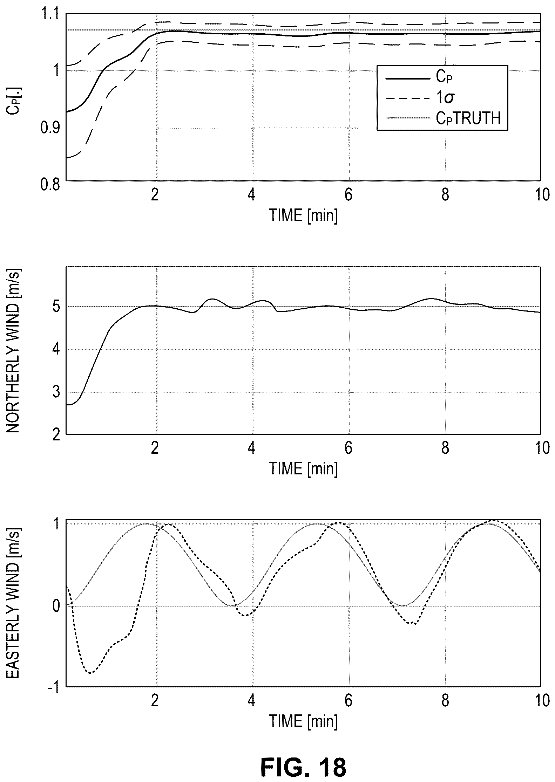

FIG. 18 depicts a KF formulation with initialization and tuning for a relatively non-uniform wind estimation in orbit. In the illustrated view of FIG. 18, a relatively non-uniform wind field can potentially be observed as demonstrated here. However, a lack of truth data and relatively slow convergence would make this unlikely to be pragmatic in a practical sense.

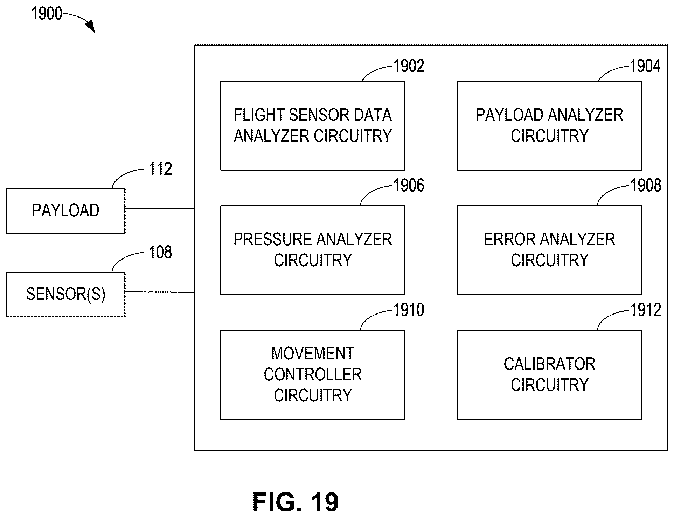

FIG. 19 is a block diagram of an example implementation of an example payload analysis system 1900 to characterize and/or determine airspeed error based on payload configuration and/or orientation. The payload analysis system 1900 of FIG. 19 may be instantiated (e.g., creating an instance of, bring into being for any length of time, materialize, implement, etc.) by programmable circuitry. For example, programmable circuitry may be implemented by a Central Processor Unit (CPU) executing first instructions, a field programmable gate array, a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc. Additionally or alternatively, the payload analysis system 1900 of FIG. 19 may be instantiated (e.g., creating an instance of, bring into being for any length of time, materialize, implement, etc.) by (i) an Application Specific Integrated Circuit (ASIC) and/or (ii) a Field Programmable Gate Array (FPGA) (e.g., another form of programmable circuitry) structured and/or configured in response to execution of second instructions to perform operations corresponding to the first instructions. It should be understood that some or all of the circuitry of FIG. 19 may, thus, be instantiated at the same or different times. Some or all of the circuitry of FIG. 19 may be instantiated, for example, in one or more threads executing concurrently on hardware and/or in series on hardware. Moreover, in some examples, some or all of the circuitry of FIG. 19 may be implemented by microprocessor circuitry executing instructions and/or FPGA circuitry performing operations to implement one or more virtual machines and/or containers.

The payload analysis system 1900 of the illustrated example includes example flight sensor data analyzer circuitry 1902, example payload analyzer circuitry 1904, example pressure analyzer circuitry 1906, example error analyzer circuitry 1908, example movement controller circuitry 1910, and example calibrator circuitry 1912. According to examples disclosed herein, the payload orientation analysis system 1900 is communicatively coupled to the flight sensor(s) 108 as well as the payload 112.

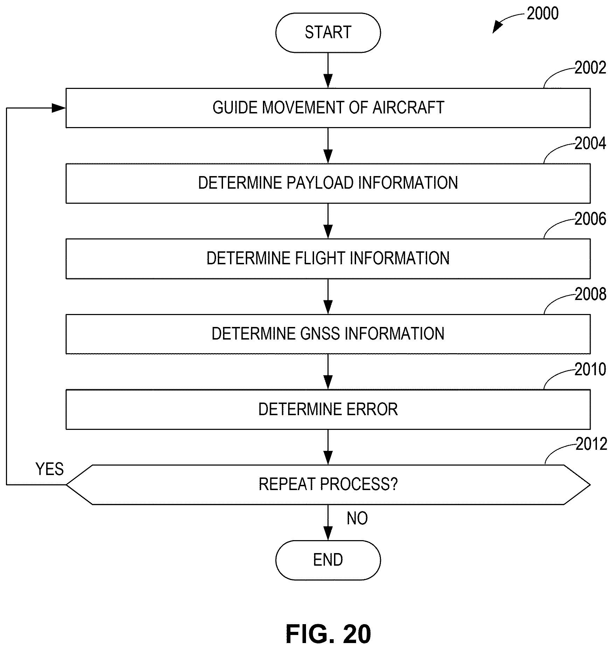

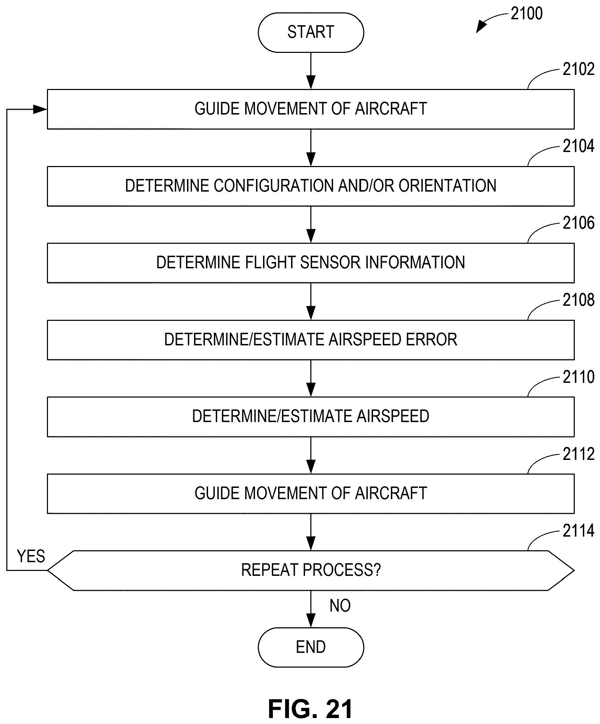

The flight sensor data analyzer circuitry 1902 of the illustrated example is implemented to obtain, access and/or receive sensor data from the flight sensor(s) 108 and/or the payload 112. According to examples disclosed herein, the flight sensor data analyzer circuitry 1902 can utilize data (e.g., inertial data, movement data, barometric pressure data, altimeter data, pressure data, etc.) from the flight sensor(s) 108, as well as image data from the payload 112, for example. In some examples, the image data can be utilized to track a target, such as a ground-based target, for example. Examples disclosed herein can be utilized for landing the aircraft onto a ground-based target or a moving ship (or other vehicle) and can advantageously enable the aircraft to land by accounting for localized wind/air effects by correcting and/or adjusting measured airspeed. In some examples, the flight sensor data analyzer circuitry 1902 is instantiated by programmable circuitry executing flight sensor data analyzer instructions and/or configured to perform operations such as those represented by the flowcharts of FIGS. 20 and 21.

According to some examples disclosed herein, the payload analyzer circuitry 1904 is utilized to determine, analyze and/or characterize a configuration, an orientation and/or a movement of the payload 112. The orientation analyzer circuitry 1904 can analyze a configuration (e.g., a selected payload, a setting, an orientation, identification of attached payload type, etc.) of the payload 112. Additionally or alternatively, the orientation analyzer circuitry 1904 can characterize the payload 112 and/or the gimbal as the payload 112 is moved (e.g., the payload 112 is moved to track the aforementioned target) for airspeed correction. In some such examples, the payload analyzer circuitry 1904 utilizes gimbal data (e.g., inertial gimbal data, gimbal movement data, rotational movement data, angular speed/acceleration data, angular speed, angular acceleration, etc.) corresponding to movement of the payload 112 as the payload 112 is utilized to track the target via the gimbal. In some examples, the payload analyzer circuitry 1904 is instantiated by programmable circuitry executing orientation analyzer instructions and/or configured to perform operations such as those represented by the flowchart of FIGS. 20 and 21.

In this example, the pressure analyzer circuitry 1906 is utilized to determine and/or estimate pressure measured at the aircraft in relation to the orientations of the payload that are measured as the payload is displaced and/or moved (e.g., moved to track a target). Additionally or alternatively, the pressure analyzer circuitry 1906 is to determine and/or estimate pressure corresponding to at least one configuration of the payload 112 (e.g., configurations corresponding to different interchangeable ones of the payload 112, based on what type of the payload 112 is attached, based on what mode the payload 112 is operating in, etc.). In some examples, the pressure analyzer circuitry 1906 utilizes flight data (e.g., flight instrumentation data, inertial data, barometric data, altimeter data, static pressure, dynamic pressure, etc.) corresponding to the flight sensor(s) 108. For example, a pressure (e.g., a dynamic pressure, a static pressure, a pressure relating static and dynamic pressures, etc.) can be determined based on outside air temperature, barometric pressure, etc. According to examples disclosed herein, the pressure analyzer circuitry 1906 determines and/or calculates a pressure ratio and/or scaling factor. Additionally or alternatively, the pressure analyzer circuitry 1906 characterizes pressure experienced by the aircraft based on different pressure readings. In some examples, the pressure analyzer circuitry 1906 is instantiated by programmable circuitry executing navigation estimator instructions and/or configured to perform operations such as those represented by the flowcharts of FIGS. 20 and 21.

In some examples, the error analyzer circuitry 1908 is implemented to estimate, calculate and/or determine error, such as an airspeed error and/or an airspeed calibration correction, for example. In particular, the error analyzer circuitry 1908 may be implemented to determine a correction to a measured airspeed and/or IAS based on flight data (e.g., flight instrumentation data, inertial data, barometric data, altimeter data, etc.) with respect to the configuration and/or the orientation of the payload 112. In some examples, the error analyzer circuitry 1908 is instantiated by programmable circuitry executing error analyzer instructions and/or configured to perform operations such as those represented by the flowcharts of FIG. 20 and 21.

In the illustrated example of FIG. 19, the movement controller circuitry 1910 is implemented to control and/or guide movement of the aircraft. According to examples disclosed herein, the movement of the aircraft can be based on the determined and/or corrected airspeed. Additionally or alternatively, the movement of the aircraft is controlled based on the determined wind and/or wind effects. In some examples, the movement controller circuitry 1910 controls the aircraft to orbit and/or maneuver relative to a target (e.g., the aircraft is controlled to move along the target in a figure eight path, an orbit and/or a stand-off path, etc.) based on the determined and/or corrected airspeed. In some examples, the movement controller circuitry 1910 is instantiated by programmable circuitry executing movement controller instructions and/or configured to perform operations such as those represented by the flowchart of FIGS. 20 and 21.

In some examples, the calibrator circuitry 1912 is implemented to characterize, estimate, calculate and/or determine an airspeed error as a function of an orientation and/or configuration of the payload 112. In particular, the calibrator circuitry 1912 may be implemented to determine a correction to measured airspeed based on GNSS data in conjunction with flight data (e.g., flight instrumentation data, inertial data, barometric data, altimeter data, pressured data, etc.) corresponding to the flight sensor(s) 108 with respect to at least one of a payload configuration or a payload orientation. In some examples, the calibrator circuitry 1912 is instantiated by programmable circuitry executing error analyzer instructions and/or configured to perform operations such as those represented by the flowcharts of FIGS. 20 and 21.

Examples disclosed can implement the following calculations, methodology and/or estimation techniques. However, any other appropriate calculations, methodology and/or estimation techniques can be implemented instead. Example methodology disclosed herein utilizes kinematics. Examples disclosed herein can be applicable to any fixed wing configuration aircraft (or other appropriate type of aircraft) that carries a directed or aimed payload, for example, a gimballed camera, a fixed wide-angle camera with known orientation, or a phased array type sensor, etc. However, any other appropriate payload implementation can be implemented instead.

Aerodynamic pressure coefficients are used to derive a scaling factor *Cₚ* that captures the performance of a pitot-static airdata system as installed on the air vehicle. *Cₚ* is an important calibration parameter that represents the ratio of measured dynamic pressure to its truth value.

Aerodynamicists define a pressure coefficient associated with a pressure P as: ${C}_{p} ≜ \frac{P - {P}_{a}^{∗}}{\frac{1}{2} ρ * V {*}^{2}}$ , where P is actual pressure, *Pₐ* is ambient pressure in static conditions, p and V are freestream conditions, and the .* notation indicates 'truth'-value (as opposed to 'measured' or 'estimated'). If *Pₜ* is total pressure, which is the sum of ambient pressure and the dynamic pressure from free-stream air, then: ${P}_{t} = {P}_{a} + \frac{1}{2} {ρV}^{2}$

The second term is dynamic pressure, which in aerospace engineering is often colloquially referred to as "q-bar." The dynamic pressure is the source for the determination of airspeed and therefore essential for flight envelope protection. Dynamic pressure can also affect aircraft dynamic behavior and, thus, can play an important role in gain-scheduling of control laws: ${P}_{dyn} = \frac{1}{2} {ρV}^{2}$

Some aircraft measure both *Pₜ* and *Pₐ* with MEMS pressure transducers corresponding to the avionics, which are connected via tubing to a pitot-tube and static ports, respectively. When example Equation 1 is applied to these measurements, it can be defined respectively that: ${C}_{p , pitot} = \frac{{{P}^{˜}}_{t} - {P}_{a}^{∗}}{{P}_{dyn}^{∗}} = 1 + \frac{Δ {P}_{t}}{{P}_{dyn}^{∗}} ,$ ${C}_{p , s . p .} = \frac{{{P}^{˜}}_{a} - {P}_{a}^{∗}}{{P}_{dyn}^{∗}} = \frac{Δ {P}_{a}}{{P}_{dyn}^{∗}}$ , where $Δ {P}_{t} ≜ {P}_{t}^{∗} + Δ {P}_{t}$ and $Δ {P}_{a} ≜ {P}_{a}^{∗} + Δ {P}_{a}$. In an idealized airdata system, the pitot-probe provides ${C}_{p , pitot}^{∗} = 1$ and the static ports provide ${C}_{p , s . p .}^{∗} = 0$. In actual airdata systems neither of these is perfectly true and furthermore, both will vary with flight conditions and configuration. A scaling factor *Cₚ* associated with an airdata system can be derived as follows: ${C}_{p} = {C}_{p , pitot} - {C}_{p , s . p .} = \frac{{{P}^{˜}}_{dyn}}{{P}_{dyn}^{∗}} = 1 + \frac{Δ {P}_{dyn}}{{P}_{dyn}^{∗}}$ , where $Δ {P}_{dyn} ≜ Δ {P}_{t} - Δ {P}_{a}$.
It is noted that example Equation 4 implies that Cₚ is the ratio of dynamic pressure measurement to its true value. Whereas Cₚ, pitot is generally close to one, the placement of the static ports means that Cₚ,_{s.p.} is subject to pressure variations along the fuselage and can therefore vary with flight conditions and aircraft configuration.

When *Cₚ* is known, errors in measured dynamic pressure can be computed as follows: $Δ {P}_{dyn} ≜ Δ {P}_{t} - Δ {P}_{a}$ Equivalently, the error in air speed is: $Δ {V}_{IAS} = \left(1-{C}_{p}^{- 1}\right) {{V}^{˜}}_{IAS}$ from which the truth-value for IAS is obtained as: ${V}_{IAS}^{∗} = {{V}^{˜}}_{IAS} - Δ {V}_{IAS} = {C}_{p}^{- \frac{1}{2}} {{V}^{˜}}_{IAS}$ The latter relates to the truth-value for TAS when combined with the local air-density truth-value as below: ${V}_{IAS}^{∗} = \left(\sqrt{\frac{ρ *}{{ρ}_{o}}}\right) {V}_{TAS}^{∗}$

Results of a quality check of a typical commercial pitot-probe configured for a relatively small UAS and MEMS pressure transducers are shown in terms of *Cₚ* in FIG. 4. This pitot-probe combines the total pressure and static-ports in a single tube. The variation in *Cₚ* is the result of aerodynamic angle of incidence of the tube only and excludes any effects of installation on the air-vehicle.

Known implementations suggest the pitot-error is directly related to the angle of incidence of the probe, such that measured dynamic pressure is obtained as: ${{P}^{˜}}_{dyn} = {P}_{dyn}^{∗} cos \left(α\right) cos \left(β\right)$ Although an *α, β* sensitivity is expected, this known model is not compatible with the observed data from the pitot-probe equality check in FIG. 4, as shown notionally in FIG. 5.

One known implementation suggests that typical static pressure errors as experienced on aircraft have the shape indicated by the dashed trace in FIG. 5, which with the tacit assumption that *C_{p,pitot} =* 1 can be expressed as: ${C}_{p} \approx {k}_{0} + \frac{{k}_{1}}{{{P}^{˜}}_{dyn}}$

This may be interpreted as a parametric model of measurement error for which parameters *k*₀ and *k*₁ is to be determined, which is accomplished in a known implementation utilizing optimization routines from system ID. Another known implementation utilizes a second order polynomial model that significantly improves upon the first order inverse model but still shows variation with the pitot-probe QC data.

The aforementioned FIG. 5 displays the result from the pitot-probe quality check in trimmed flight over a speed-sweep. These results suggest that a 2nd order inverse model is rather more appropriate, as indicated in FIG. 5, which is: ${C}_{p} \approx {k}_{0} + \frac{{k}_{1}}{{{P}^{˜}}_{dyn}} + \frac{{k}_{2}}{{{P}^{˜}}_{dyn}^{2}}$

The 2nd order parametric model is a relatively straightforward extension for most LSQ based optimization routines, however, care must be taken to provide data with sufficient variation in IAS, otherwise the generalized inverse associated with the optimization will be ill-conditioned. The quality of fit can also benefit from the ability to collect data near the lowest dynamic pressure operations.

The results in aforementioned FIG. 5 are of interest mostly as a starting point and reflect a certain idealized performance of a pitot-static system in an unperturbed free-stream. In practice, the difficulty of robustly identifying higher order terms from distributed results in noisy telemetry means that these higher order models remain somewhat suspect unless a highly accurate aerodynamic model is available. The band 502 previously indicated in FIG. 5 gives an indication of 0.5 m/s accuracy and suggests that a linear approximation might be acceptable.

The barometric altimeter provides pressure altitude with the ability to bias for non-standard sea-level pressure and is based on the following relation: ${{h}^{˜}}_{p} = \frac{{T}_{o}}{λ} \left[{\left(\frac{{P}^{˜}}{{P}_{o}}\right)}^{- \frac{Rλ}{{g}_{o}}}-1\right]$

As a matter of background, for perspective, Federal Aviation Regulations (FAR) Section 23 guidelines suggest that pressure altitude (corrected for instrumentation error) should have an accuracy of ±30 [*ft*] at air speeds below 100[*Kts*].

The sea-level pressure is not generally equal to *Pₒ* and a 'Kollsman correction' can, therefore, be utilized to bias the measurement to account for non-standard sea-level pressure. On relatively small autonomous aircraft this typically occurs with a synchronization of the barometric altitude with GNSS/GPS information reported geometric height MSL. This correction in altitude is then equated to an equivalent pressure at sea level that can be interpreted as the altimeter setting *Pₛₑₜ.* The utilization of GNSS/GPS and synchronization at altitude is different from convention but it generally remains well within acceptable error limits. The Kollsman correction is then obtained as follows: ${Δ}_{K} = \frac{{T}_{o}}{λ} \left[{\left(\frac{{P}_{set}}{{P}_{o}}\right)}^{\frac{- Rλ}{{g}_{o}}}-1\right]$ and, therefore, the barometric altitude can be reported as: ${{h}^{˜}}_{baro} = {{h}^{˜}}_{p} - {Δ}_{K}$

A typical modern autopilot typically computes the IAS in the following manner. Given total pressure (e.g., stagnation pressure) from the pitot-tube and ambient pressure from the static-port, such that the dynamic pressure is obtained as follows: ${{P}^{˜}}_{dyn} = {{P}^{˜}}_{t} - {{P}^{˜}}_{a}$ Accordingly, an airdata processor can compute the Mach-number from the dynamic pressure as: ${M}^{˜} \left({P}_{dyn}\right) = \sqrt{\frac{2}{γ - 1} \left[{\left(\frac{{{P}^{˜}}_{dyn}}{{P}_{o}}+1\right)}^{\frac{γ - 1}{γ}}-1\right]}$ Further, the IAS is obtained as: ${{V}^{˜}}_{IAS} \left({P}_{dyn}\right) = {a}_{o} {M}^{˜} \left({P}_{dyn}\right)$ , where *aₒ* = 340.3 [*m*/*s*] is the speed of sound at SA sea-level. TAS is then estimated assuming an ideal gas in SA conditions: ${\hat{V}}_{TAS} \left({P}_{dyn}, h\right) = M \left({P}_{dyn}\right) \sqrt{γR {\hat{T}}_{SA} \left({h}^{˜}\right)}$ Where *γ* = 1.4 is the specific heat ratio of dry air, and R = 286.9 [*J*/*kg°K*] the gas constant, and *T̂*_{SA} is the estimated outside air temperature as computed from the measured altitude: ${\hat{T}}_{SA} \left({h}^{˜}\right) = 288.15 \left[K o\right] + γ {h}^{˜}$

An objective is an estimate for ${C}_{p}^{∗}$ and FIG. 6 indicates how this relies on GPS as 'truth'. The pressure altitude is obtained from the barometric sensor and combined with the outside air temperature (OAT) measurement and a Standard Atmosphere model to estimate local air density. These results are then combined to obtain an estimate of expected dynamic pressure, and hence the correction to indicated airspeed.

Not explicitly shown in FIG. 6 is the coupling between barometric sensor error and the dynamic pressure measurement. However, as indicated in FIG. 7, any reasonable barometric sensor error has very little effect on the output of the standard atmosphere model.

The assumptions made with respect to FIG. 6 are as follows: (1) GNSS/GPS velocities are 'exact' (e.g., errors are ignored in reported GNSS/GPS velocity which are typically at the *cm*/*s* level); (2) Standard Atmosphere pressure gradient applies from sea level to flight altitude, corrected for non-standard temperature, with adiabatic lapse rate and ideal gas law; (3) The effect of a Barometric pressure error on air-density is negligible. A static port error affects the measured altitude which implies an error in the computation of air-density. However, this effect is relatively small, as seen in FIG. 7; and (4) The outside air temperature (OAT) measurement is accurate to a requisite degree. This is a can be a reasonable assumption as the effect of temperature error on the air-density estimate is relatively small, FIG. 7. Accordingly, assumption (1) can lead to a best estimate *V̂*_{TAS}(*gps*) for ${V}_{TAS}^{∗}$, and Assumptions (2)-(4) can provide a good approximation *ρ̂* of *ρ*,* which allows an estimate for ${C}_{p}^{∗}$ summarized as: ${\hat{C}}_{p} = \frac{{{P}^{˜}}_{dyn}}{\frac{1}{2} \hat{ρ} \left(SA\right) {\hat{V}}_{TAS}^{2} \left(gps\right)}$

Air-density can be estimated by simply trusting the OAT and ambient pressure measurement and assuming the SA model for the pressure variation, as follows:
1. Obtain the reported pressure and obtain the pressure altitude or equivalently the pressure ratio. For example, the altimeter setting is reported as Altimeter_Pa = 101321 that is equivalent to 29.92 inches mercury (in HG) and suggests that the BaroAlt is providing pressure *h̃ₚ.*
2. If the barometric altimeter is not set to 29.92 in Hg, for example, then a Kollsman correction is to be accounted for, which refers to a step in pressure altitude associated with altimeter setting *Pₛₑₜ*: ${Δ}_{K} = \frac{{T}_{o}}{λ} \left[{\left(\frac{{P}_{set}}{{P}_{o}}\right)}^{\frac{- Rλ}{{g}_{o}}}-1\right]$ Pressure altitude is then determined with this correction as: ${{h}^{˜}}_{p} = {{h}^{˜}}_{baro} - {Δ}_{K}$
3. Given *h̃ₚ,* the pressure ratio experienced by the aircraft can be as expressed as: $δ ≜ \left(\frac{{P}^{˜}}{{P}_{o}}\right) = {\left(1+{{h}^{˜}}_{p}\frac{λ}{{T}_{o}}\right)}^{- \frac{{g}_{o}}{Rλ}}$
4. Using the outside air temperature sensor, compute the temperature ratio: $Θ ≜ \left(\frac{{T}^{˜}}{{T}_{o}}\right) = \frac{273.15 + {OAT}_{C o}}{{T}_{o}}$
5. Accordingly, the density ratio can be obtained as: $σ ≜ \left(\frac{ρ}{{ρ}_{o}}\right) = \frac{δ}{Θ}$
Thus, the computed estimate of the actual air density experienced by the aircraft is: $\hat{ρ} = σ {ρ}_{o}$ Accordingly, steps 1-5 above provide all the inputs for Equation 8, repeated here, which provides our estimate for *Cₚ*: ${\hat{C}}_{p} = \frac{{{P}^{˜}}_{dyn}}{\frac{1}{2} \hat{ρ} {\hat{V}}_{a}^{2}}$

With the foregoing assumptions and approximations, the observed airspeed error can be expressed directly in terms of the flight results as follows. If 'measured IAS' is defined as exclusively based on the dynamic pressure measurement: ${{V}^{˜}}_{IAS} ≜ \sqrt{\left(\frac{2}{{ρ}_{o}}\right) {{P}^{˜}}_{dyn}}$ and it is assumed that the air-density computation and GPS signals as providing 'truth, such that: ${P}_{dyn}^{∗} \approx \frac{1}{2} \hat{ρ} {\hat{V}}_{TAS}^{2} = \frac{1}{2} {ρ}_{o} {\left({{V}^{˜}}_{IAS}+Δ{V}_{IAS}\right)}^{2}$ , then an 'indicated airspeed error' can be compared directly as: $Δ {V}_{IAS} = \left(\sqrt{\frac{\hat{ρ}}{{ρ}_{o}}}\right) {\hat{V}}_{TAS} - {{V}^{˜}}_{IAS}$ FIG. 8 indicates a typical result from multiple orbits at constant IAS in a single flight. It is clear from the illustrated view of FIG. 8 that large variations remain, and many flights would be needed to gain statistical confidence in the results. This result justifies some review of error sources.

The vector sum of velocities in the horizontal plane, referred to as 'Wind Triangle', can be expressed as: ${\vec{V}}_{g} = {\vec{V}}_{a} + {\vec{V}}_{w}$ , where *V̅_{g}* is inertial velocity, *V̅_{w}* is the velocity of the air mass, and *V̅ₐ* is the velocity of the aircraft relative to the air-mass. Magnitude *V_{g} =* ∥*V̅_{g}*∥ is ground speed, and similarly *V_{w}* is wind speed, and *Vₐ* is referred to as true airspeed.

The straightforward interpretation of example Equation 10 for navigation is by splitting it up into North and East components, ${V}_{g , N} - {W}_{N} = {V}_{a} cos \left(ψ+β cos ϕ-α sin ϕ\right)$ ${V}_{g , E} - {W}_{E} = {V}_{a} sin \left(ψ+β cos ϕ-α sin ϕ\right)$ If flight in the horizontal plane with small angle-of-attack and zero side-slip angle is assumed, then: ${V}_{a} cos ψ + {W}_{N} = {V}_{g} cos χ$ ${V}_{a} sin ψ + {W}_{E} = {V}_{g} sin χ$ , where *W_{N} and W_{E}* represent movement of the air mass in North and East directions and hence imply the 'wind-to' direction (opposite of typical weather-reporting), and ${V}_{w} = \sqrt{{W}_{N}^{2} + {W}_{E}^{2}}$

For estimation algorithms, the use of North and East components is preferable to polar coordinates (speed and direction). The ground speed components are available from a GPS/GNSS source, from which velocity information is an order of magnitude more accurate than the errors wished to be identified and therefore it can be assumed these to be 'known' in North and East components, whereas airspeed and heading are measured. The wind-triangle expression may be reorganized as: ${V}_{a} cos ψ {= V}_{g , N} - {W}_{N}$ ${V}_{a} sin ψ {= V}_{g , E} - {W}_{E}$ If airspeed and wind are assumed constant, then example Equations (13) and (14) represent a parametric expression of a circle centered at {*W_{N}, W_{E}*} with radius *Vₐ.* The dependence on heading *ψ* (which is not always known) can be eliminated and the algebraic expression for the circle obtained as follows: ${V}_{a}^{2} = {\left({V}_{g , N}-{W}_{N}\right)}^{2} + {\left({V}_{g , E}-{W}_{E}\right)}^{2}$

In line with the typical Kalman Filter convention, each measurement as 'truth + error' can be modeled: ${{V}^{˜}}_{a} = {V}_{a}^{∗} + Δ {V}_{a}$ ${ψ}^{˜} = ψ * + Δ ψ$ where (·)* implies a (generally unknown) truth-value, and the Δ(·) terms may include both steady bias and varying elements. The above implies the errors are defined as 'measurement minus truth': $Δ {V}_{a} ≜ {{V}^{˜}}_{a} - {V}_{a}^{∗}$ For consistency, the prevailing wind field can be defined as consisting of a constant wind component minus variations, and these variations can be assumed to vary with location but not with time: ${W}_{N}^{∗} = {W}_{N , o} - Δ {W}_{N} \left({x}_{N}, {y}_{E}\right)$ ${W}_{E}^{∗} = {W}_{E , o} - Δ {W}_{E} \left({x}_{N}, {y}_{E}\right)$ Example equations 13 and 14 may be expressed as: ${V}_{g , N} - \left({{V}^{˜}}_{a}-Δ{V}_{a}\right) cos \left({ψ}^{˜}-Δψ\right) = {W}_{N , o} - Δ {W}_{N}$ ${V}_{g , E} - \left({{V}^{˜}}_{a}-Δ{V}_{a}\right) sin \left({ψ}^{˜}-Δψ\right) = {W}_{E , o} - Δ {W}_{E}$ , where
*Ṽₐ* is measured with the airdata system,
*ψ̃* is obtained from the Nav.Filter and/or from magnetometer data (the latter being notoriously non-Gaussian and non-trivial to calibrate),
*V_{g,N}* and *V_{g,E}* are obtained from the GNSS/GPS receiver, and
*W_{N}, W_{E},* Δ*Vₐ,* and Δ*ψ* are not known.
In this formulation, Δ*ψ* could include the effect of an unknown steady non-zero side-slip angle *β*: $Δ ψ = α sin \left(ϕ\right) - β cos \left(ϕ\right)$

The LSQ methods used or implied in known implementations rely on the assumption of 'constant wind', which implies a uniform wind field (the left image in FIG. 10) that is perturbed only by turbulence which is normally distributed in time (i.e. zero-mean Gaussian noise). Airspeed and heading error-signals (Δ*Vₐ* and Δ*Vψ*) are similarly assumed to be constant biases perturbed by Gaussian noise throughout the orbit.

The error components on the airspeed vector (*ΔVₐ* and Δ*Vψ*) are by definition perpendicular, and similarly for the wind error components (Δ*W_{N}* and Δ*W_{E}*), as seen in FIG. 9. The purpose of collecting data throughout an orbit is to be able to distinguish effects of {Δ*V_{ψ},*Δ*Vₐ*} from those of *W_{N} and W_{E}* by varying *ψ*. If there is wind-variation {Δ*W_{N},*Δ*W_{E}*} with location in orbit, the ability to make the distinction can be hampered.

FIG. 10 shows the notional difference between a uniform wind field and wind as a function of location. The effect of the latter means that the wind varies systematically with location in orbit, which correlates to the orientation of the vehicle. Unless the vehicle has somewhat perfect hard and soft iron calibration and no EMI-variations during orbit, the magnetic disturbances are also correlated to the orientation of the vehicle. This implies that a heading error cannot be distinguished from systematic wind variation, and that, in turn, can taint the *Cₚ* estimate.

The nature of the airspeed estimation problem is suited for linearized ordinary LSQ methods, two of which will be explicitly described below. However, if computational optimization tools are available such as the ubiquitous Mathworks^{®} products, then nonlinear optimization can be an option (e.g., Matlab functions such as fminsearch, and nonlinlsq, etc.). Accordingly, the formulation of an objective function is required, which is typically accomplished as follows: $f \left({V}_{a}, {W}_{n}, {W}_{E}\right) ≜ {\left({{V}^{˜}}_{g , N}-{W}_{N}\right)}^{2} + {\left({{V}^{˜}}_{g , E}-{W}_{E}\right)}^{2} - {V}_{a}^{2}$ and construct the objective function as: $J \left(Δ{V}_{a},{W}_{N},{W}_{E}\right) = {f}^{2} \left({V}_{a}, {W}_{n}, {W}_{E}\right)$ Alternatively, $f ≜ {\left({f}_{1} {f}_{2}\right)}^{T}$ can be defined where: ${f}_{1} \left(Δ{V}_{a},Δψ,{W}_{N}\right) = \left({{V}^{˜}}_{g , N}-{W}_{N}\right) - \left({{V}^{˜}}_{a}-Δ{V}_{a}\right) cos \left({ψ}^{˜}-Δψ\right)$ ${f}_{2} \left(Δ{V}_{a},Δψ,{W}_{E}\right) = \left({{V}^{˜}}_{g , E}-{W}_{E}\right) - \left({{V}^{˜}}_{a}-Δ{V}_{a}\right) sin \left({ψ}^{˜}-Δψ\right)$ and the associated objective function can be expressed as: $J \left(Δ{V}_{a},Δψ,{W}_{N},{W}_{E}\right) = {f}^{T} f = {f}_{1}^{2} + {f}_{2}^{2}$ The solution may then be found using variations of the Levenberg-Marquardt method (and a host of other optimization tools and options) for minimization of the objective function.

As a representative of current methods, the telemetry of two orbits flown at constant commanded airspeed about an orbit-waypoint ('Orbit1') in a reasonably calm setting are used. With 'reasonably calm' defined as an aim for the absence of convective activity or relatively strong winds over a relatively large area, thereby allowing a relatively large orbit to keep required bank angles relatively small. FIG. 11 provides the geometry of the wind-triangle over a complete orbit in terms of North and East velocity components. The two circles represent the two sides of example Equation 15 and are shifted by the prevailing wind. GNSS/GPS provides rather accurate information for the ground speed circle, and the presented estimation methods to find the corresponding airspeed circle are used.

The result of non-linear optimization tools applied to the analytic expression for the wind-triangle Equation 15 in the form of objective function Equation 19 for 'Orbit 1' is: $\left(\begin{matrix}Δ {V}_{a} \\ {W}_{N} \\ {W}_{E}\end{matrix}\right) = \left(\begin{matrix}0.59 \left[m/s\right] \\ 8.69 \left[m/s\right] \\ - 4.21 \left[m/s\right]\end{matrix}\right)$

In this example, the result of optimizing the parametric expressions Equations 13 and 14 in the form of objective function Equation 20 for 'Orbit 1' is: $\left(\begin{matrix}Δ {V}_{a} \\ Δ {V}_{ψ} \\ {W}_{N} \\ {W}_{E}\end{matrix}\right) = \left(\begin{matrix}0.59 \left[m/s\right] \\ - 0.67 \left[m/s\right] \\ 8.71 \left[m/s\right] \\ - 4.21 \left[m/s\right]\end{matrix}\right)$ These results suggest that averaging the parametric model of the wind triangle (i.e. using heading information) can be used with some confidence, provided that heading information is generally reliable and the foregoing assumptions remain applicable throughout the orbit.

Furthermore, the telemetry corresponding to 'Orbit 1' suggests that *ρ̂* = 0.8813 [*kg*/*m*³] , and *P̃_{dyn}* = 533 [*N*/*m*²], and following the steps in FIG. 6, the best estimate of ${C}_{p}^{∗}$ is: ${\hat{C}}_{p} = \frac{{{P}^{˜}}_{dyn}}{\frac{1}{2} \hat{ρ} \left({\hat{r}}^{2}\right)} = 0.9668$

According to examples disclosed herein, several Kalman Filter formulations are feasible for the airdata system, which is inherently coupled to observation of wind. One known implementation demonstrates how GNSS/GPS may be used to simultaneously estimate wind speed and calibrate airspeed. However, the proposed model in another known solution for effects of *α* and *β* does not match observations from industrial calibration data. Examples disclosed herein provide an initial example of a Kalman-filter formulation of this estimation problem. This can motivate the following observability review applied to the parametric equations for the wind-triangle, rather than the analytical 'law of cosines' expression used in known implementations.

However, known implementations do not account for indicated airspeed correction, which can necessitate estimation of air-density, nor do they explicitly address the effect of variations in air speed on the correction factor. To compare these KF formulations, it should be explicitly defined that their reference to airspeed implies a reported true airspeed, which is inherently coupled to an estimate of air-density. Whereas indicated airspeed is obtained from measured dynamic pressure using the convenience of standard reference value for density: ${V}_{IAS} = \sqrt{\frac{2}{{ρ}_{o}} {{P}^{˜}}_{dyn}}$ , where *ρₒ* = 1.225 [*kg*/*m*³] is SA density at sea-level, the true airspeed is obtained from indicated airspeed as: ${V}_{TAS} = {V}_{IAS} \left(\sqrt{\frac{{ρ}_{o}}{p *}}\right)$

One example disclosed herein restricts motion to the horizontal plane and avoids attempts at estimation of aerodynamic angles. According to examples disclosed herein, a primary aim can be airdata calibration instead of wind estimation. This can matter in parameter tuning of a filter, which represents a trade-off in settling time versus ability to track changes. Prevailing wind can be captured with averaging or with very slow filtering (implicitly specified by tuning of the process variance associated with wind variations). However, wind variations in orbit from a non-uniform wind field can be more difficult to account for. Although technically slowly varying, these wind variations are a function of location in orbit and, consequently, display a correlation with aircraft orientation that reduces the accuracy achievable in airspeed calibration.

In the vernacular of Kalman-filter estimator design, the wind-triangle equations in parametric form may be reorganized to represent the example measurement equations as follows: ${\left(\begin{matrix}{V}_{g , N} \\ {V}_{g , E}\end{matrix}\right)}_{gps} = \left(\begin{matrix}{W}_{N} \\ {W}_{E}\end{matrix}\right) + κ {{V}^{˜}}_{a} \left(\begin{matrix}cos ψ \\ sin ψ\end{matrix}\right)$ , where the wind components and a scaling factor *κ* make up the unknown state: $x = {\left({W}_{N} {W}_{E} κ\right)}^{T}$ Accordingly, κ can be related to the dynamic pressure scaling factor as $κ = \sqrt{{C}_{p}}$. However, this is somewhat loosely stated, as κ includes small angle assumptions and absorbs errors in the density estimate, in addition to any *α*, *β* effects.
The plant model will reflect that the unknown states are constants corrupted by Gaussian noise. $\dot{x} = A x + b ω$ , where *A* ≡ **O** , **b** = diag(*σ_{w}*, *σ_{w}*, *σ_{κ}*), and ***ω*** is a vector of white noise. In accordance with teachings of this disclosure, example Equation 21 above represents a measurement model: $y = C x$ , where $C \left(t\right) = \left(\begin{matrix}1 & 0 & {{V}^{˜}}_{a} cos {ψ}^{˜} \\ 0 & 1 & {{V}^{˜}}_{a} sin {ψ}^{˜}\end{matrix}\right)$ This linear formulation enables a glance at the observability conditions necessitated for estimation of the states. Accordingly, the observability Grammian can be defined as: $\begin{matrix}{W}_{o} \left(t\right) ≜ {\int }_{0}^{t} exp \left({A}^{T}τ\right) C {\left(τ\right)}^{T} C \left(τ\right) exp \left(Aτ\right) dτ \\ = {\int }_{0}^{t} \left(\begin{matrix}1 & 0 & {V}_{a} cos ψ \\ 0 & 1 & {V}_{a} sin ψ \\ {V}_{a} cos ψ & {V}_{a} sin ψ & {V}_{a}^{2}\end{matrix}\right) dτ\end{matrix}$ It is noted from the construction of *Wₒ*(*t*) that it is not full rank unless *ψ* changes over time. This relates directly to the conditioning of the LSQ observation matrix and reflects the intuition that changes in heading are required to observe both wind and airspeed corrections simultaneously.

The {A, *C*(*ψ*)} formulation can also be used for a look at the estimation-error dynamics. Accordingly, the estimation error $Δx ≜ \hat{x} - x$ and the output error used in the observer are defined as $Δ y ≜ \hat{y} - y$. The estimator dynamics are then represented by: $\frac{d}{dt} Δx = K \left(\hat{y}-y\right) = - KC Δx$ , where $\hat{x} = \left(\begin{matrix}{\hat{W}}_{N} \\ {\hat{W}}_{E} \\ \hat{κ}\end{matrix}\right) , \hat{y} = C \hat{x} , and y = {\left(\begin{matrix}{V}_{g , N} \\ {V}_{g , E}\end{matrix}\right)}_{gps}$

In this example, the gain is a time-varying 3×2 matrix obtained from the noise models of the GNSS/GPS signals and the confidence in the plant model and its process noise, which is propagated as follows: $\dot{P} = Q - {PC}^{T} {R}^{- 1} CP$ $K = {PC}^{T} {R}^{- 1}$ , where P is the estimator covariance and R is noise in the dynamic pressure and GNSS/GPS velocity measurements. From the perspective of the Kalman filter model, Q = bb*^{T}* represents stochastic noise in wind speed and rate of change of the scaling factor. In practice, Q and R are our tuning knobs that represent both how quickly it is wished for the scaling factor estimate to settle versus how closely the scaling factor estimate is desired to track wind variations.

If an object is airspeed calibration that settles within a few orbits at most, then the following examples will show that the favored tuning of Q and R is such that the KF will tend to resemble the LSQ methods where wind variations are filtered out. Alternatively, some bandwidth can be utilized for wind variation, but this bandwidth utilization can come at a price of slower convergence in the scaling factor.

One known implementation estimates wind in polar coordinates and a scaling factor on *P_{gyn},* and the known measurement equation is expressed in terms of dynamic pressure. The measurement noise covariance includes the effects from turbulence and noise in GNSS/GPS signals, all expressed in [*Pa²*]*.* Another known implementation utilizes a KF state defined in Cartesian coordinates and a Δ*V*_{TAS} and a measurement equation representing true airspeed. Yet another known implementation attempts to estimate wind in 3D and a scaling factor on airspeed. The known implementations measurement equation is the ground speed component along the longitudinal body axis. Known implementations place emphasis on prevailing wind estimation, and their tuning varies slightly.

The broadest formulation of a Kalman filter may include all measurements, acknowledge they are noisy and possibly biased signals. Bias may be present in temperature, barometric altitude, and heading. If it is chosen not to explicitly model these biases, then the estimate of *Cₚ* can absorb its effects.

Consider the following error models: ${{h}^{˜}}_{p} = {h}_{baro}^{∗} + {Δ}_{K} + {v}_{h}$ ${{T}^{˜}}_{C} = {T}_{C}^{∗} + {v}_{T}$ ${{V}^{˜}}_{g , N} = {V}_{g , N}^{∗} + {v}_{g , 1}$ ${{V}^{˜}}_{g , E} = {V}_{g , E}^{∗} + {v}_{g , 2}$ ${{P}^{˜}}_{dyn} = {C}_{p}^{∗} {P}_{dyn}^{∗} + {v}_{P}$ The variables to be estimated are: $x = {\left({C}_{p} ρ {W}_{N} {W}_{E}\right)}^{T}$ The measurements are: $y = {\left({h}_{p} {T}_{C} {V}_{g , N} {V}_{g , E} {P}_{dyn}\right)}^{T}$ These measurements can be relied on to determine ${C}_{p}^{∗}$ by providing a best guess for ${P}_{dyn}^{∗}$*,* which is constructed as follows. Define measured pressure ratio and temperature ratio can be expressed as: ${δ}^{˜} ≜ {\left(1+{{h}^{˜}}_{p}\frac{λ}{{T}_{o}}\right)}^{- {g}_{o} / R / λ} and {Θ}^{˜} ≜ \frac{{Δ}_{K} + {{T}^{˜}}_{C}}{{T}_{o}}$ , then the estimate of density can be expressed as: $\hat{ρ} = \frac{δ}{{Θ}^{˜}} {ρ}_{o}$ The unknown states relate to these measurements as: ${\hat{P}}_{dyn} = {\hat{C}}_{p} \frac{1}{2} \hat{ρ} \left({\left({{V}^{˜}}_{g , N}-{\hat{W}}_{N}\right)}^{2}+{\left({{V}^{˜}}_{g , E}-{\hat{W}}_{E}\right)}^{2}\right)$ The disturbances can be grouped as follows: $w = {\left({v}_{c} {v}_{h} {v}_{T} {v}_{w , 1} {v}_{w , 2}\right)}^{T}$ $v = {\left({v}_{h} {v}_{T} {v}_{g , 1} {v}_{g , 2} {v}_{P}\right)}^{T}$ The proposed dynamics are simply expressed as: $\dot{x} = f \left(t, x, u, w\right) \approx f \left(t, w\right)$ $y = h \left(t, x, v\right)$ , where the simplification is applicable if the aircraft maintains altitude. In practice, both airspeed and altitude of the aircraft can vary in time. In particular, dynamics associated with a climbing flight can be added explicitly, so that: $\dot{ρ} \left(t\right) = f \left(ρ, {h}_{p}\right) \dot{h}$ However, for the aircraft, this can amount to a slowly varying *ρ*(*t*) at most, and, hence, a random walk model will suffice.

Because air density is not directly measured, a calculation thereof inherits the characteristics of the barometric pressure and OAT sensors, and, therefore, the two disturbance vectors have elements in common. If the process noise covariance is expressed as: $Q = E \left\{w {w}^{T}\right\} = diag \left({σ}_{c}^{2} {σ}_{h}^{2} {σ}_{T}^{2} {σ}_{w , 1}^{2} {σ}_{w , 2}^{2}\right)$ and the measurement noise covariance are expressed as: $R = E \left\{v {v}^{T}\right\} = diag \left({σ}_{h}^{2} {σ}_{T}^{2} {σ}_{g , 1}^{2} {σ}_{g , 2}^{2} {σ}_{P}^{2}\right)$ , then the cross covariance between states and measurements can be expressed as: $S = E \left\{w {v}^{T}\right\} = \left(\begin{matrix}{O}_{1 \times 2} & {O}_{1 \times 3} \\ diag \left({σ}_{h}^{2}, {σ}_{T}^{2}\right) & {O}_{2 \times 3} \\ {O}_{2 \times 2} & {O}_{2 \times 3}\end{matrix}\right)$ However, because there is little influence of reasonable barometric and temperature error on the air-density estimate, this covariance between states and measurements can be ignored.

FIG. 12 indicates the steps for the in-flight estimation of ${C}_{P}^{∗}$, which is similar to FIG. 6 but enables tuning of the estimation through the covariance model (effectively tuning for desired bandwidth versus noise-sensitivity trade-off). A key difference with the approach in known implementations is examples disclosed herein utilize an inclusion of the altimeter and OAT measurements for air-density estimation as part of the filter and an explicit accounting for the wind field variations.

According to examples disclosed herein, the TAS can be derived from GNSS/GPS with the wind-triangle equation such that: ${V}_{TAS}^{∗ 2} \approx {\hat{V}}_{TAS}^{2} \left(gps\right) = {\left({V}_{g , N}-{W}_{N}^{∗}\right)}^{2} + {\left({V}_{g , E}-{W}_{E}^{∗}\right)}^{2}$ Typical GNSS/GPS velocity errors are two orders of magnitude smaller than the airspeed errors desired to be identified. Therefore, from a Kalman filter perspective, the velocity errors can be treated as 'truth' values, thereby implying that the GNSS/GPS signals are considered independent system input and noise in their values will be generally ignored.

According to examples disclosed herein, from example Equation 8 as well as FIG. 12, the differential dynamic pressure measurement can be expressed as: ${{P}^{˜}}_{dyn} = {C}_{P}^{∗} \frac{1}{2} ρ * {V}_{TAS}^{∗ 2}$

The air-density estimate plays an important role in FIG. 12. Fortunately, the density estimate is relatively robust with respect to typical sensor errors. The effects of a pressure error equivalent to about 1000 [*ft*], or a temperature error of about 10 [*^{o}C*], which would be considered rather unlikely errors, both lead to about ±0.5 m/s IAS error at 10,000 ft in altitude, FIG. 7. Realistic sensor errors are expected to be an order of a magnitude less.

However, for the KF formulation there is some error effect from a combination of barometric pressure and temperature fluctuations that are reflected in the air-density value. The relation between OAT and air-density may be expressed as: ${{T}^{˜}}_{{o}_{C}} = {T}_{o} δ \left(\frac{{ρ}_{o}}{ρ}\right) - Δ {T}_{K}$ , where Δ*T_{K}* = 273.15*^{o}* is the offset between degrees Celsius and Kelvin.

According to examples disclosed herein, if the measurement of dynamic pressure and temperature is expressed in typical KF formulation, the observation at time t = k can be modeled as: ${{y}^{˜}}_{k} = \left(\begin{matrix}{{P}^{˜}}_{dyn} \left({t}_{k}\right) \\ {{T}^{˜}}_{{o}_{C}} \left({t}_{k}\right)\end{matrix}\right) = h \left({x}_{k}, {u}_{k}\right) + {v}_{k} {v}_{k} ∼ N \left\{O, {R}_{k}\right\}$ where $x ≜ {\left({C}_{p} ρ {W}_{N} {W}_{E}\right)}^{T} , u ≜ {\left({V}_{g , N} {V}_{g , E}\right)}^{T}$*,* and $h \left(x, u\right) = \left(\begin{matrix}{h}_{1} \\ {h}_{2}\end{matrix}\right) = \left(\begin{matrix}{C}_{p} \frac{1}{2} ρ \left\{{\left({V}_{g , N}-{W}_{N}\right)}^{2}+{\left({V}_{g , E}-{W}_{E}\right)}^{2}\right\} \\ {T}_{o} δ \left(\frac{{ρ}_{o}}{ρ}\right) - Δ {T}_{K}\end{matrix}\right)$ , where h is the conventional KF notation for the measurement equation, not to be confused with notation h for altitude.

The measurement covariance can be related to the continuous time model by division by sample-time: ${R}_{k} = \frac{R}{Δ t}$

The Jacobian of the measurement equation is: ${H}_{k} = {\left.\frac{δ h}{δ x}\right|}_{{\hat{x}}_{k}^{-}} = \left(\begin{matrix}\frac{{δh}_{1}}{{δC}_{p}} & \frac{{δh}_{1}}{δρ} & \frac{{δh}_{1}}{{δW}_{N}} & \frac{{δh}_{1}}{{δW}_{E}} \\ 0 & \frac{{δh}_{2}}{δρ} & 0 & 0\end{matrix}\right)$ , where $\frac{{δh}_{1}}{{δC}_{p}} = \frac{1}{2} ρ \left\{{\left({V}_{g , N}-{W}_{N}\right)}^{2}+{\left({V}_{g , E}-{W}_{E}\right)}^{2}\right\}$ $\frac{{δh}_{1}}{δρ} = \frac{1}{2} {C}_{p} \left\{{\left({V}_{g , N}-{W}_{N}\right)}^{2}+{\left({V}_{g , E}-{W}_{E}\right)}^{2}\right\}$ $\frac{{δh}_{1}}{{δW}_{N}} = - {C}_{p} ρ \left({V}_{g , N}-{W}_{N}\right)$ $\frac{{δh}_{1}}{{δW}_{E}} = - {C}_{p} ρ \left({V}_{g , E}-{W}_{E}\right)$ $\frac{{δh}_{2}}{δρ} = - {T}_{o} δ \left(\frac{{ρ}_{o}}{{ρ}^{2}}\right)$

The KF plant dynamics are based on the idea that the prevailing wind varies only very slowly, and similarly the orbits as flown are assumed to be at near constant altitude. Therefore, a simple Gauss-Markov model is assumed for each state variable, so that: $\dot{x} \left(t\right) = ω \left(t\right) , ω \left(t\right) ∼ N \left\{O,Q\left(t\right)\right\}$ The choice of Q(t)and *Rₖ* is a combination of art and science and can require some careful interpretation. ${\hat{x}}_{0}^{-} = \hat{x} \left({t}_{0}\right) = \left(\begin{matrix}{\hat{C}}_{p} \left({t}_{0}\right) \\ \hat{ρ} \left({t}_{0}\right) \\ {\hat{W}}_{N} \left({t}_{0}\right) \\ {\hat{W}}_{E} \left({t}_{0}\right)\end{matrix}\right) = \left(\begin{matrix}1 \\ {ρ}_{SA} \\ {V}_{w} cos \left({γ}_{w}+π\right) \\ {V}_{w} sin \left({γ}_{w}+π\right)\end{matrix}\right)$ , where *ρ*_{SA} is the standard air-density, or a density altitude estimate if available. *V_{w}* and *γ_{w}* are taken from the 'winds-aloft' forecast for wind-speed and direction ('wind-from'), respectively. The following may be selected: *W_{N}*(*t*₀) *= W_{E}*(*t*₀) = 0, but a significant transient should then be expected which may require multiple orbits before convergence.

When a new GNSS/GPS-measurement comes in and/or is received/determined (e.g., at approximately 4 Hz), computing the sensitivity, the new gain, and updating the estimate and its covariance yields: ${\hat{x}}_{k}^{-} = {\left({\hat{C}}_{p}^{+}\left({t}_{k - 1}\right) {\hat{ρ}}^{+}\left({t}_{k - 1}\right) {\hat{W}}_{N}^{+}\left({t}_{k - 1}\right) {\hat{W}}_{E}^{+}\left({t}_{k - 1}\right)\right)}^{T}$ ${H}_{k} = {\left.\frac{δ h}{δ x}\right|}_{{\hat{x}}_{k}^{-}}$ ${K}_{k} = {P}_{k}^{-} {H}_{k}^{T} {\left[{H}_{k}{P}_{k}^{-}{H}_{k}^{T}+{R}_{k}\right]}^{- 1}$ ${\hat{x}}_{k}^{+} = {\hat{x}}_{k}^{-} + {K}_{k} \left[{{y}^{˜}}_{k}-h\left({\hat{x}}_{k}^{-}\right)\right]$ ${P}_{k}^{+} = \left[I-{K}_{k}{H}_{k}\right] {P}_{k}^{-}$

Accordingly, the model is stepped forward in time until the next measurement comes in, which can involve tuning covariance parameters, since constant bias models are estimated. $\dot{\hat{x}} \left(t\right) = O$ $\dot{P} \left(t\right) = Q \left(t\right)$ , where *Q*(*t*) is a spectral density matrix. Given that an extended Kalman filter (EKF) is implemented in discrete steps, it is accommodated with a discrete model implementation and convert *Q*(*t*) to the covariance matrix with sample step size Δ*t, Qₖ =* Δ*tQ*(*t*) and the following equations can be utilized: ${\hat{x}}_{k + 1}^{-} = {\hat{x}}_{k}^{+}$ ${P}_{k + 1}^{-} = {P}_{k}^{+} + {Q}_{k}$

The result of this EKF applied to the same telemetry used previously, consisting of about two complete orbits in wind at *W_{N} ≈* 8.7 m/s and *W_{E}* ≈ -4.2 m/s is shown in FIG. 13. Scrutiny of the wind estimates shows performance variation in sync with location in orbit, with undulations in covariance a quarter orbit out-of-phase, which is a consequence of the lack of observability conditions in this filter.

The various methods are compared in the following table. All averaged methods agree to within significant digits. The EKF shows a slight variance which reflects changes in wind between the first and second orbit.

**Table 4. Orbit sampling results [m/s].**

| | fminsearch | LSQ | EKF |
|---|---|---|---|
| Δ*V*_{TAS} | 0.5914 | 0.5849 | 0.6366 |
| Δ*V_{ψ}* | -0.6769 | -0.6771 | |
| *W_{N}* | 8.7102 | 8.7100 | 8.7868 |
| *W_{E}* | -4.2071 | -4.2072 | -4.0725 |

Due to the assumptions and non-linear interdependence of the wind-triangle, there is a certain 'luck-of-the-draw' to the available data. For example, if the wind is varying significantly, or if heading bias has a strong correlation to direction, then this would be reflected in the statistical spread of all variables.

For the ordinary LSQ solution, the Root-Sum-Square of the measurement residuals is *σ̂*, i.e. the estimate of 1σ. $\hat{x} = {\left({A}^{T}A\right)}^{- 1} {A}^{T} b , with {\hat{σ}}^{2} = \frac{{ϵ}^{T} ϵ}{2 n - k}$ where ***ε*** = *A***x** - **b** is the vector of residuals for all measurements, *n* is number of measurements, and *k* is number of unknowns. For 'Orbit 1' telemetry, *σ̂* = 0.25 m/s is obtained, as shown in FIG. 16.

A running tally of the statistical variance can also be maintained to see where and when it settles. In the example case, the variance of the data settled after about an orbit and a half, as reflected in an iterative tally of the standard deviation, FIG. 16. It appears that one orbit is generally enough to reach a steady variance value, as reflected in a survey of ten orbits in FIG. 17.

A difference in the EKF formulation is implied since it alters the example dynamic model of the wind. The EKF takes advantage of a wind model in its predictive step. This example can be hard to verify in actual flight conditions primarily because its verification is subject to the same lack of truth values as most such exercises. However, the example is included here to emphasize aspects of the Kalman filter approach considering much more sophisticated models used in the literature relevant to wind-estimation, and also because modern simulation models certainly allow for reproduction and verification of these results.

According to examples disclosed herein, a formulation of the EKF dynamics model for wind that allows for variation in orbit can be expressed as follows: ${\hat{W}}_{N} = {W}_{N , o} + {W}_{N , 1} sin \left({χ}^{˜}+Φ\right)$ ${\hat{W}}_{E} = {W}_{E , o} + {W}_{E , 1} cos \left({χ}^{˜}+Φ\right)$ , where {*W_{N,o}, W_{E,o}*} is the prevailing nominal wind and *W*_{*N,*1} and *W*_{*E,*1} are components of 'once per orbit' variation in wind at a location determined by phase Φ. All parameters are to be estimated and only *χ̃* is measured.

According to examples disclosed herein, the wind models of Equations 25 and 26 are added to the measurement equation as: ${h}_{1} = {C}_{p} {{P}^{˜}}_{dyn} = {C}_{p} \frac{ρ}{2} \left({\left({V}_{g , N}-{\hat{W}}_{N}\right)}^{2}+{\left({V}_{g , E}-{\hat{W}}_{E}\right)}^{2}\right)$ from which an EKF can be formulated similar to the foregoing but with an augmented state: $x = {\left({C}_{p} ρ {W}_{N , o} {W}_{E , o} {W}_{N , 1} {w}_{E , 1} ϕ\right)}^{T}$ Significantly, note that the dynamic model remains 'constant' in time, such that: ${\dot{W}}_{N , o} = {\dot{W}}_{N , 1} = {\dot{W}}_{E , o} = {\dot{W}}_{E , 1} = \dot{Φ} = 0$ In Kalman filter construction this implies each parameter is still modeled as a simple random walk process: $\frac{d}{dt} x = η$

FIG. 18 indicates results for *Ĉₚ, Ŵ_{N},* and *Ŵ_{E}* when applied to the analytical wind field with truth values as follows:

| Truth values: | | | | | | |
|---|---|---|---|---|---|---|
| ${C}_{P}^{∗}$ | *ρ** | ${W}_{N , o}^{∗}$ | ${W}_{E , o}^{∗}$ | ${W}_{N , 1}^{∗}$ | ${W}_{E , 1}^{∗}$ | *ϕ** |
| 1.07 [·] | 1.225 [*kg*/*m*³] | 5.0 [*m*/*s*] | 0.5 [*m*/*s*] | 0.0 [*m*/*s*] | -0.5 [*m*/*s*] | 0.0 [*m*/*s*] |

| Estimates after 10 minutes in orbit: | | | | | | |
|---|---|---|---|---|---|---|
| *Ĉₚ* | *ρ̂* | *Ŵ_{N,o}* | *Ŵ_{E,o}* | *Ŵ*_{*N,*1} | *Ŵ*_{*E,*1} | *ϕ̂* |
| 1.066 | 1.225 | 5.01 | 0.50 | 0.09 | -0.55 | 7.1 |

Different estimation techniques were reviewed for the airdata calibration problem using GNSS/GPS velocity as truth data. The use of GNSS/GPS inherently couples the estimation of wind and true airspeed and requires maneuvering for data conditioning and observability. Flight in a geometric orbit provides observability and is chosen for reasons of convenience, as it is a common way-point mode for a UAS. Both averaging methods and kinematics-based filtering work well but are affected by non-uniformity of the wind field. To make the effect of non-uniformity explicit, an analytic example was considered by combining kinematics of a coordinated turn in wind with a notional wind field. The example allows analytic expressions for both the wind field and the wind experienced by the aircraft in orbit.

The results show that the averaging methods can be utilized but their results become less accurate with increased effects of a non-uniformity of the wind field. Notably, the heading bias (or non-zero side slip angle) estimate is corrupted by the variation in wind.

It is possible for a linearized LSQ model with more parameters to identify a non-uniform wind field, however, this is not likely a robust general approach. The Kalman filter estimates, including its *Cₚ* estimate, similarly reflect the effects of varying wind distinctly. The EKF does not settle on a wind-estimate without averaging, which can be improved with tuning but only at the expense of more variation in the *Cₚ* estimate or with additional modeling at the expense of robustness and convergence time.

While an example manner of implementing the payload analysis system 1900 of FIG 19 is illustrated in FIG. 19, one or more of the elements, processes, and/or devices illustrated in FIG. 19 may be combined, divided, re-arranged, omitted, eliminated, and/or implemented in any other way. Further, the example flight sensor data analyzer circuitry 1902, the example payload analyzer circuitry 1904, the example pressure analyzer circuitry 1906, the example error analyzer circuitry 1908, the example movement controller circuitry 1910, the example calibrator circuitry 1912, and/or, more generally, the example payload analysis system 1900 of FIG. 19, may be implemented by hardware alone or by hardware in combination with software and/or firmware. Thus, for example, any of the example flight sensor data analyzer circuitry 1902, the example payload analyzer circuitry 1904, the example pressure analyzer circuitry 1906, the example error analyzer circuitry 1908, the example movement controller circuitry 1910, the example calibrator circuitry 1912, and/or, more generally, the example payload analysis system 1900, could be implemented by programmable circuitry, processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), vision processing units (VPUs), and/or field programmable logic device(s) (FPLD(s)) such as FPGAs in combination with machine readable instructions (e.g., firmware or software). Further still, the example payload analysis system 1900 of FIG. 19 may include one or more elements, processes, and/or devices in addition to, or instead of, those illustrated in FIG. 19, and/or may include more than one of any or all of the illustrated elements, processes and devices.

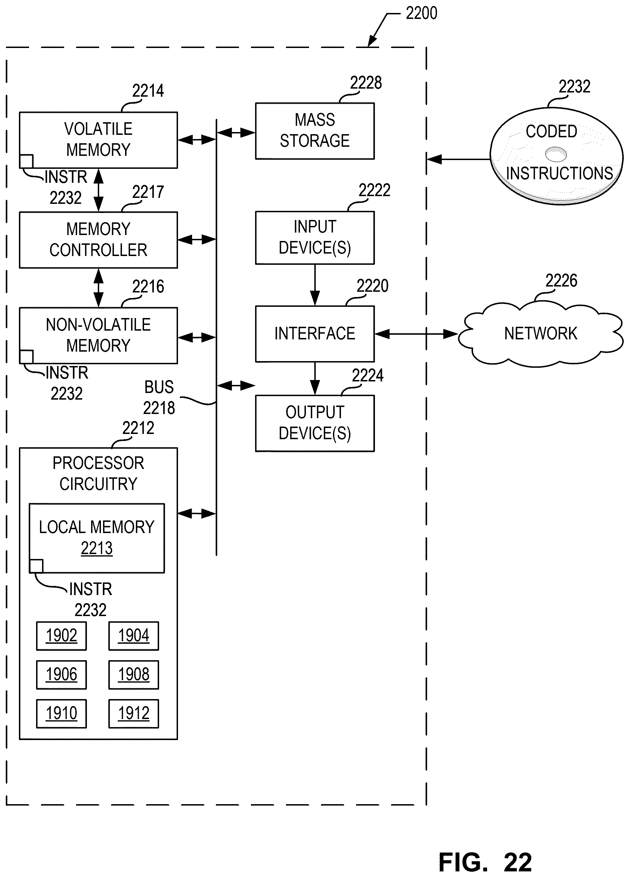

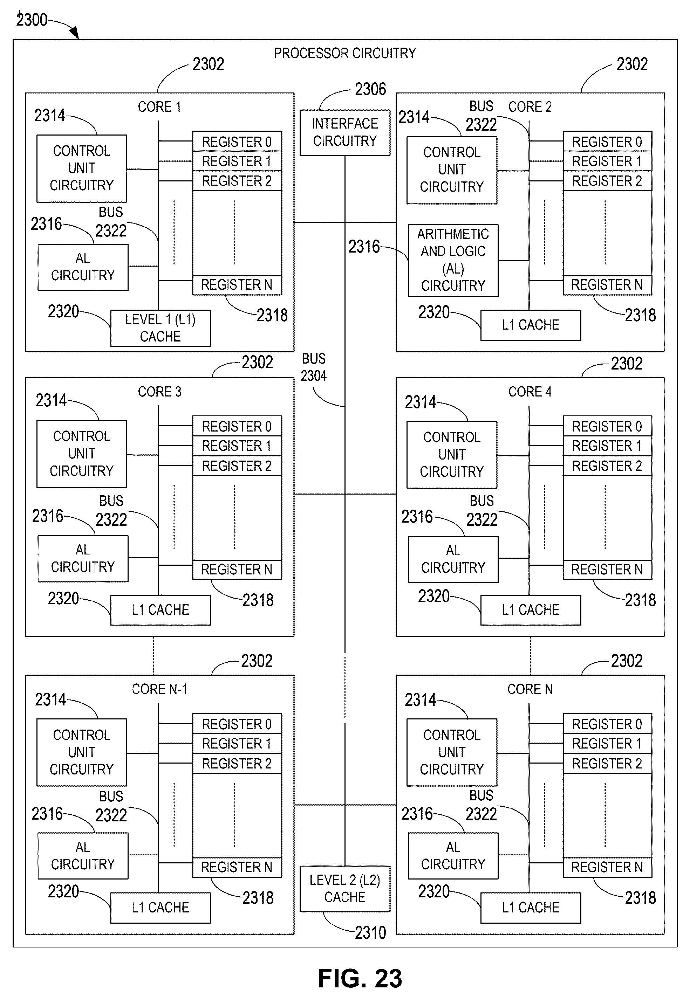

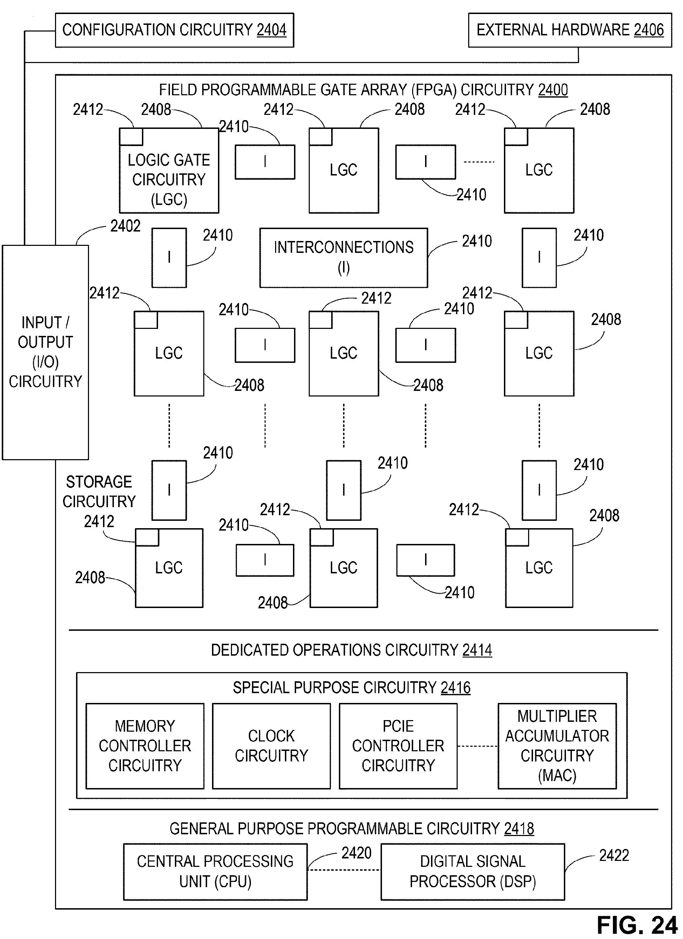

Flowcharts representative of example machine readable instructions, which may be executed by programmable circuitry to implement and/or instantiate the payload analysis system 1900 of FIG. 19 and/or representative of example operations which may be performed by programmable circuitry to implement and/or instantiate the payload analysis system 1900 of FIG. 19, are shown in FIGS. 20 and 21. The machine readable instructions may be one or more executable programs or portion(s) of one or more executable programs for execution by programmable circuitry such as the programmable circuitry 2212 shown in the example processor platform 2200 discussed below in connection with FIG. 22 and/or may be one or more function(s) or portion(s) of functions to be performed by the example programmable circuitry (e.g., an FPGA) discussed below in connection with FIGS. 23 and/or 24. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more (optionally non-transitory) computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, nonvolatile memory (e.g., electrically erasable programmable read-only memory (EEPROM), flash memory, etc.), volatile memory (e.g., Random Access Memory (RAM) of any type, etc.), and/or any other storage device or storage disk. The instructions of the (optionally non-transitory) computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the (optionally non-transitory) computer readable storage medium may include one or more mediums. Further, although the example program is described with reference to the flowcharts illustrated in FIGS. 20 and 21, many other methods of implementing the example payload analysis system 1900 may alternatively be used. For example, the order of execution of the blocks of the flowcharts may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). As used herein, programmable circuitry includes any type(s) of circuitry that may be programmed to perform a desired function such as, for example, a CPU, a GPU, a VPU, and/or an FPGA. The programmable circuitry may include one or more CPUs, one or more GPUs, one or more VPUs, and/or one or more FPGAs located in the same package (e.g., the same integrated circuit (IC) package or in two or more separate housings), one or more CPUs, GPUs, VPUs, and/or one or more FPGAs in a single machine, multiple CPUs, GPUs, VPUs, and/or FPGAs distributed across multiple servers of a server rack, and/or multiple CPUs, GPUs, VPUs, and/or FPGAs distributed across one or more server racks. Additionally or alternatively, programmable circuitry may include a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), etc., and/or any combination(s) thereof in any of the contexts explained above.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C-Sharp, Perl, Python, JavaScript, HyperText Markup Language (HTML), Structured Query Language (SQL), Swift, etc.

As mentioned above, the example operations of FIGS. 20 and 21 may be implemented using executable instructions (e.g., computer readable and/or machine readable instructions) stored on one or more (optionally non-transitory) computer readable and/or machine readable media. As used herein, the terms (optionally non-transitory) computer readable medium, (optionally non-transitory) computer readable storage medium, (optionally non-transitory) machine readable medium, and/or (optionally non-transitory) machine readable storage medium are expressly defined to include any type of computer readable storage device and/or storage disk and to optionally exclude propagating signals and to optionally exclude transmission media. Examples of such (optionally non-transitory) computer readable medium, (optionally non-transitory) computer readable storage medium, (optionally non-transitory) machine readable medium, and/or (optionally non-transitory) machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "(optionally non-transitory) computer readable storage device" and "(optionally non-transitory) machine readable storage device" are defined to include any physical (mechanical, magnetic and/or electrical) hardware to retain information for a time period, but to optionally exclude propagating signals and to exclude transmission media. Examples of (optionally non-transitory) computer readable storage devices and/ or (optionally non-transitory) machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 20 is a flowchart representative of example machine readable instructions and/or example operations 2000 that may be executed, instantiated, and/or performed by programmable circuitry determine an airspeed and/or calibrate an airspeed measurement based on at least one of a payload configuration or an orientation of a payload (e.g., the payload 112) of an aircraft (e.g., the aircraft 100). The example machine-readable instructions and/or the example operations 2000 of FIG. 20 begin at block 2002, at which the movement controller circuitry 1910 guides movement of the aircraft. In some examples, the movement controller circuitry 1910 with respect to a target (e.g., to orbit the target, to maneuver relative to the target, etc.).

At block 2004, in some examples, the example payload analyzer circuitry 1904 determines payload information. The payload information can correspond to a payload configuration (e.g., a type of payload attached to the aircraft, a mode of the payload, etc.) and/or an orientation of the payload. In some examples, the example payload analyzer circuitry 1904 determines at least one of a configuration or an orientation of the payload as the aircraft is in flight. According to some examples disclosed herein, the example payload analyzer circuitry 1904 and/or movement controller circuitry 1910 causes the payload to be moved and/or rotated for obtaining flight information (e.g., for an inflight calibration and/or adjustment of airspeed).

In the illustrated example of FIG. 20, at block 2006, the flight sensor data analyzer circuitry 1902 and/or the pressure analyzer circuitry 1906 determines and/or measures flight information. For example, the flight sensor data analyzer circuitry 1902 and/or the pressure analyzer circuitry 1906 obtains data/information from flight sensors with respect to the aircraft in flight (and corresponding to a configuration and/or orientation of the payload). The flight information can correspond to temperature information, pressure information, pressure data, airspeed, pressure differentials, etc.

At block 2008, the flight sensor data analyzer circuitry 1902 of the illustrated example determines, received and/or accesses GNSS data/information, such as positional data or velocity data. In this example, the flight sensor data analyzer circuitry 1902 obtains the GNSS data/information as the aircraft is in flight (e.g., in orbit with respect to a target).

At block 2010, the example calibrator circuitry 1912 determines and/or characterizes an error (e.g., an airspeed error) corresponding to at least one of the payload configuration or the payload orientation. For example, the calibrator circuitry 1912 can calibrate a measured airspeed of the aircraft based on the error. According to some examples disclosed herein, the calibrator circuitry 1912 can characterize airspeed corrections with different payload configurations and/or orientations with respect to flight information and/or sensor readings (e.g., pressure sensor readings, temperature sensor readings, etc.). In some examples, the calibrator circuitry 1912 can generate tables (e.g., lookup tables), arrays, etc. to relate the payload configuration and/or the payload orientation with respect to pressure measurements and/or determined pressure values (e.g., differential pressure values) for airspeed correction.

At block 2012, the calibrator circuitry 1912 determines whether to repeat the process. If the process is to be repeated (block 2012), control of the process returns to block 2002. Otherwise, the process ends. The determination may be based on whether the payload is sufficiently characterized for airspeed determinations (e.g., a payload configuration is characterized, payload orientations are characterized, etc.).

FIG. 21 is a flowchart representative of example machine readable instructions and/or example operations 2100 that may be executed, instantiated, and/or performed by programmable circuitry to determine an airspeed correction for an aircraft (e.g., a fixed wing aircraft) carrying a payload, which may be movable or stationary. The example machine-readable instructions and/or the example operations 2100 of FIG. 21 begin at block 2102, as the example movement controller circuitry 1910 causes and/or directs the aircraft to be moved. According to examples disclosed herein, the movement controller circuitry 1910 directs and/or controls the aircraft to orbit a target and/or an area corresponding to the target. Additionally or alternatively, the example movement controller circuitry 1910 directs the aircraft to move in a pattern, such as a figure-8 or a stand-off pattern movement, with respect to the target and/or the area corresponding to the target. In some examples, the aircraft is in the process of landing onto a defined area (e.g., a landing pad, a vehicle such as a ship, etc.)

At block 2104, the example payload analyzer circuitry 1904 determines a configuration and/or an orientation of the payload. In some examples, a change in the payload (configuration) causes the determination to be triggered. Additionally or alternatively, a degree of change in pressure distribution exceeding a threshold degree of change in pressure distribution causes the example payload analyzer circuitry 1904 to determine the configuration and/or the orientation of the payload. In some examples, a pressure disruption causes the determination of the configuration and/or the orientation. According to some examples disclosed herein, the payload analyzer circuitry 1904 determines at least one of an orientation or a movement (e.g., a movement history) of the payload relative to the aircraft and/or a fuselage of the aircraft. To that end, the example payload analyzer circuitry 1904 can utilize gimbal data (e.g., inertial gimbal data, movement data, orientation data, etc.) for determination and/or calculation of the orientation.

At block 2106, the example flight sensor data analyzer circuitry 1902 and/or the example pressure analyzer circuitry 1906 determines, estimates and/or calculates flight information (e.g., flight data, flight sensor information, etc.). According to examples disclosed herein, the flight sensor data analyzer circuitry 1902 and/or the example pressure analyzer circuitry 1906 receives and/or accesses sensor data corresponding to a flight sensor (e.g., the flight sensor(s) 108). The flight information may include, but is not limited to, temperature data, barometric data, airspeed, pressure data, inertial flight data, movement data, flight information data, aircraft instrumentation measurements, etc.

At block 2108, the example error analyzer circuitry 1908 and/or the example pressure analyzer circuitry 1906 determines and/or estimates an airspeed error based on the flight information in conjunction with one or more of the payload configuration and/or the payload orientation. In some examples, the example error analyzer circuitry 1908 and/or the example pressure analyzer circuitry 1906 utilizes a database, a table and/or an array that relates the flight information with respect to the payload configuration and/or the payload orientation for determination of the airspeed error. Additionally or alternatively, the airspeed error corresponds to calibrated airspeed data corresponding to different orientations of the payload. In some examples, the payload configuration and/or the payload orientation are related to a pressure coefficient based on pressure measurements (or any other appropriate type of measurements).

At block 2110, in some examples, the example error analyzer circuitry 1908 and/or the example pressure analyzer circuitry 1906 determines, estimates and/or calculates an airspeed (e.g., a corrected airspeed, an adjusted airspeed, a calibrated airspeed) based on the aforementioned airspeed error. According to examples disclosed herein, the airspeed is determined by adjusting a measured and/or estimated airspeed based on the aforementioned airspeed error. Additionally or alternatively, airspeed measurements and/or calculations are calibrated based on the airspeed error.

At block 2112, the example movement controller circuitry 1910 guides and/or controls movement of the aircraft based on the determined airspeed. In some examples, the aircraft is guided to orbit a target based on the determined airspeed. Additionally or alternatively, the aircraft is guided to maneuver relative to the target based on the determined airspeed. In some examples, the aircraft is guided to land onto a target or area proximate the target. According to some examples disclosed herein, the airspeed and/or orientation of the payload is controlled to increase a range of the aircraft. In other words, examples disclosed herein can control an aircraft for an increased range and/or efficiency based on the corrected and/or calibrated airspeed. According to some examples disclosed herein, a pathway of the aircraft is adjusted based on the determined airspeed (e.g., for increased efficiency, for reduced energy/fuel consumption, etc.). Additionally or alternatively, the payload is oriented and/or moved to reduce energy fuel consumption (e.g., the payload is oriented relative to the aircraft to reduce pressure acting on the aircraft) based on the determined airspeed for increased range.

At block 2114, it is determined by the example error analyzer circuitry 1908 as to whether to repeat the process. If the process is to be repeated (block 2114), control of the process returns to block 2102. Otherwise, the process ends. The determination may be based on whether the payload has moved, whether a pressure change has exceeded a threshold pressure change, whether a wind condition has changed and/or whether a pressure change or a pressure/airflow disruption is encountered, etc.

FIG. 22 is a block diagram of an example programmable circuitry platform 2200 structured to execute and/or instantiate the example machine-readable instructions and/or the example operations of FIGS. 20 and 21 to implement the payload analysis system 1900 of FIG. 19. The programmable circuitry platform 2200 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 2200 of the illustrated example includes programmable circuitry 2212. The programmable circuitry 2212 of the illustrated example is hardware. For example, the programmable circuitry 2212 can be implemented by one or more integrated circuits, logic circuits, FPGAs, microprocessors, CPUs, GPUs, VPUs, DSPs, and/or microcontrollers from any desired family or manufacturer. The programmable circuitry 2212 may be implemented by one or more semiconductor based (e.g., silicon based) devices. In this example, the programmable circuitry 2212 implements the example flight sensor data analyzer circuitry 1902, the example payload analyzer circuitry 1904, the example pressure analyzer circuitry 1906, the example error analyzer circuitry 1908, the example movement controller circuitry 1910, and the example calibrator circuitry 1912.

The programmable circuitry 2212 of the illustrated example includes a local memory 2213 (e.g., a cache, registers, etc.). The programmable circuitry 2212 of the illustrated example is in communication with main memory 2214, 2216, which includes a volatile memory 2214 and a non-volatile memory 2216, by a bus 2218. The volatile memory 2214 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 2216 may be implemented by flash memory and/or any other desired type of memory device. Access to the main memory 2214, 2216 of the illustrated example is controlled by a memory controller 2217. In some examples, the memory controller 2217 may be implemented by one or more integrated circuits, logic circuits, microcontrollers from any desired family or manufacturer, or any other type of circuitry to manage the flow of data going to and from the main memory 2214, 2216.

The programmable circuitry platform 2200 of the illustrated example also includes interface circuitry 2220. The interface circuitry 2220 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 2222 are connected to the interface circuitry 2220. The input device(s) 2222 permit(s) a user (e.g., a human user, a machine user, etc.) to enter data and/or commands into the programmable circuitry 2212. The input device(s) 2222 can be implemented by, for example, an audio sensor, a microphone, a camera (still or video), a keyboard, a button, a mouse, a touchscreen, a trackpad, a trackball, an isopoint device, and/or a voice recognition system.

One or more output devices 2224 are also connected to the interface circuitry 2220 of the illustrated example. The output device(s) 2224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 2220 of the illustrated example, thus, typically includes a graphics driver card, a graphics driver chip, and/or graphics processor circuitry such as a GPU.

The interface circuitry 2220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 2226. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 2200 of the illustrated example also includes one or more mass storage discs or devices 2228 to store firmware, software, and/or data. Examples of such mass storage discs or devices 2228 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 2232, which may be implemented by the machine readable instructions of FIGS. 20 and 21, may be stored in the mass storage device 2228, in the volatile memory 2214, in the non-volatile memory 2216, and/or on at least one (optionally non-transitory) computer readable storage medium such as a CD or DVD which may be removable.

FIG. 23 is a block diagram of an example implementation of the programmable circuitry 2212 of FIG. 22. In this example, the programmable circuitry 2212 of FIG. 22 is implemented by a microprocessor 2300. For example, the microprocessor 2300 may be a general-purpose microprocessor (e.g., general-purpose microprocessor circuitry). The microprocessor 2300 executes some or all of the machine-readable instructions of the flowcharts of FIGS. 20 and 21 to effectively instantiate the circuitry of FIG. 19 as logic circuits to perform operations corresponding to those machine readable instructions. In some such examples, the circuitry of FIG. 19 is instantiated by the hardware circuits of the microprocessor 2300 in combination with the machine-readable instructions. For example, the microprocessor 2300 may be implemented by multi-core hardware circuitry such as a CPU, a DSP, a GPU, an XPU, etc. Although it may include any number of example cores 2302 (e.g., 1 core), the microprocessor 2300 of this example is a multi-core semiconductor device including N cores. The cores 2302 of the microprocessor 2300 may operate independently or may cooperate to execute machine readable instructions. For example, machine code corresponding to a firmware program, an embedded software program, or a software program may be executed by one of the cores 2302 or may be executed by multiple ones of the cores 2302 at the same or different times. In some examples, the machine code corresponding to the firmware program, the embedded software program, or the software program is split into threads and executed in parallel by two or more of the cores 2302. The software program may correspond to a portion or all of the machine readable instructions and/or operations represented by the flowcharts of FIGS. 20 and 21.

The cores 2302 may communicate by a first example bus 2304. In some examples, the first bus 2304 may be implemented by a communication bus to effectuate communication associated with one(s) of the cores 2302. For example, the first bus 2304 may be implemented by at least one of an Inter-Integrated Circuit (I2C) bus, a Serial Peripheral Interface (SPI) bus, a PCI bus, or a PCIe bus. Additionally or alternatively, the first bus 2304 may be implemented by any other type of computing or electrical bus. The cores 2302 may obtain data, instructions, and/or signals from one or more external devices by example interface circuitry 2306. The cores 2302 may output data, instructions, and/or signals to the one or more external devices by the interface circuitry 2306. Although the cores 2302 of this example include example local memory 2320 (e.g., Level 1 (L1) cache that may be split into an L1 data cache and an L1 instruction cache), the microprocessor 2300 also includes example shared memory 2310 that may be shared by the cores (e.g., Level 2 (L2 cache)) for high-speed access to data and/or instructions. Data and/or instructions may be transferred (e.g., shared) by writing to and/or reading from the shared memory 2310. The local memory 2320 of each of the cores 2302 and the shared memory 2310 may be part of a hierarchy of storage devices including multiple levels of cache memory and the main memory (e.g., the main memory 2214, 2216 of FIG. 22). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 2302 may be referred to as a CPU, DSP, GPU, etc., or any other type of hardware circuitry. Each core 2302 includes control unit circuitry 2314, arithmetic and logic (AL) circuitry (sometimes referred to as an ALU) 2316, a plurality of registers 2318, the local memory 2320, and a second example bus 2322. Other structures may be present. For example, each core 2302 may include vector unit circuitry, single instruction multiple data (SIMD) unit circuitry, load/store unit (LSU) circuitry, branch/jump unit circuitry, floating-point unit (FPU) circuitry, etc. The control unit circuitry 2314 includes semiconductor-based circuits structured to control (e.g., coordinate) data movement within the corresponding core 2302. The AL circuitry 2316 includes semiconductor-based circuits structured to perform one or more mathematic and/or logic operations on the data within the corresponding core 2302. The AL circuitry 2316 of some examples performs integer based operations. In other examples, the AL circuitry 2316 also performs floating-point operations. In yet other examples, the AL circuitry 2316 may include first AL circuitry that performs integer-based operations and second AL circuitry that performs floating-point operations. In some examples, the AL circuitry 2316 may be referred to as an Arithmetic Logic Unit (ALU).

The registers 2318 are semiconductor-based structures to store data and/or instructions such as results of one or more of the operations performed by the AL circuitry 2316 of the corresponding core 2302. For example, the registers 2318 may include vector register(s), SIMD register(s), general-purpose register(s), flag register(s), segment register(s), machine-specific register(s), instruction pointer register(s), control register(s), debug register(s), memory management register(s), machine check register(s), etc. The registers 2318 may be arranged in a bank as shown in FIG. 23. Alternatively, the registers 2318 may be organized in any other arrangement, format, or structure, such as by being distributed throughout the core 2302 to shorten access time. The second bus 2322 may be implemented by at least one of an I2C bus, a SPI bus, a PCI bus, or a PCIe bus.

Each core 2302 and/or, more generally, the microprocessor 2300 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 2300 is a semiconductor device fabricated to include many transistors interconnected to implement the structures described above in one or more integrated circuits (ICs) contained in one or more packages.

The microprocessor 2300 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 2300, in the same chip package as the microprocessor 2300 and/or in one or more separate packages from the microprocessor 2300.

FIG. 24 is a block diagram of another example implementation of the programmable circuitry 2212 of FIG. 22. In this example, the programmable circuitry 2212 is implemented by FPGA circuitry 2400. For example, the FPGA circuitry 2400 may be implemented by an FPGA. The FPGA circuitry 2400 can be used, for example, to perform operations that could otherwise be performed by the example microprocessor 2300 of FIG. 23 executing corresponding machine readable instructions. However, once configured, the FPGA circuitry 2400 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 2300 of FIG. 23 described above (which is a general purpose device that may be programmed to execute some or all of the machine readable instructions represented by the flowcharts of FIGS. 20 and 21 but whose interconnections and logic circuitry are fixed once fabricated), the FPGA circuitry 2400 of the example of FIG. 24 includes interconnections and logic circuitry that may be configured, structured, programmed, and/or interconnected in different ways after fabrication to instantiate, for example, some or all of the operations/functions corresponding to the machine readable instructions represented by the flowcharts of FIGS. 20 and 21. In particular, the FPGA circuitry 2400 may be thought of as an array of logic gates, interconnections, and switches. The switches can be programmed to change how the logic gates are interconnected by the interconnections, effectively forming one or more dedicated logic circuits (unless and until the FPGA circuitry 2400 is reprogrammed). The configured logic circuits enable the logic gates to cooperate in different ways to perform different operations on data received by input circuitry. Those operations may correspond to some or all of the instructions (e.g., the software and/or firmware) represented by the flowcharts of FIGS. 20 and 21. As such, the FPGA circuitry 2400 may be configured and/or structured to effectively instantiate some or all of the operations/functions corresponding to the machine readable instructions of the flowcharts of FIGS. 20 and 21 as dedicated logic circuits to perform the operations/functions corresponding to those software instructions in a dedicated manner analogous to an ASIC. Therefore, the FPGA circuitry 2400 may perform the operations/functions corresponding to the some or all of the machine readable instructions of FIGS. 20 and 21 faster than the general-purpose microprocessor can execute the same.

In the example of FIG. 24, the FPGA circuitry 2400 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 2400 of FIG. 24 may access and/or load the binary file to cause the FPGA circuitry 2400 of FIG. 24 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2400 of FIG. 24 to cause configuration and/or structuring of the FPGA circuitry 2400 of FIG. 24, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 2400 of FIG. 24 may access and/or load the binary file to cause the FPGA circuitry 2400 of FIG. 24 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 2400 of FIG. 24 to cause configuration and/or structuring of the FPGA circuitry 2400 of FIG. 24, or portion(s) thereof.

The FPGA circuitry 2400 of FIG. 24, includes example input/output (I/O) circuitry 2402 to obtain and/or output data to/from example configuration circuitry 2404 and/or external hardware 2406. For example, the configuration circuitry 2404 may be implemented by interface circuitry that may obtain a binary file, which may be implemented by a bit stream, data, and/or machine-readable instructions, to configure the FPGA circuitry 2400, or portion(s) thereof. In some such examples, the configuration circuitry 2404 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 2406 may be implemented by external hardware circuitry. For example, the external hardware 2406 may be implemented by the microprocessor 2300 of FIG. 23.

The FPGA circuitry 2400 also includes an array of example logic gate circuitry 2408, a plurality of example configurable interconnections 2410, and example storage circuitry 2412. The logic gate circuitry 2408 and the configurable interconnections 2410 are configurable to instantiate one or more operations/functions that may correspond to at least some of the machine readable instructions of FIGS. 20 and 21 and/or other desired operations. The logic gate circuitry 2408 shown in FIG. 24 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 2408 to enable configuration of the electrical structures and/or the logic gates to form circuits to perform desired operations/functions. The logic gate circuitry 2408 may include other electrical structures such as look-up tables (LUTs), registers (e.g., flip-flops or latches), multiplexers, etc.

The configurable interconnections 2410 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 2408 to program desired logic circuits.

The storage circuitry 2412 of the illustrated example is structured to store result(s) of the one or more of the operations performed by corresponding logic gates. The storage circuitry 2412 may be implemented by registers or the like. In the illustrated example, the storage circuitry 2412 is distributed amongst the logic gate circuitry 2408 to facilitate access and increase execution speed.

The example FPGA circuitry 2400 of FIG. 24 also includes example dedicated operations circuitry 2414. In this example, the dedicated operations circuitry 2414 includes special purpose circuitry 2416 that may be invoked to implement commonly used functions to avoid the need to program those functions in the field. Examples of such special purpose circuitry 2416 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 2400 may also include example general purpose programmable circuitry 2418 such as an example CPU 2420 and/or an example DSP 2422. Other general purpose programmable circuitry 2418 may additionally or alternatively be present such as a GPU, an XPU, etc., that can be programmed to perform other operations.

Although FIGS. 23 and 24 illustrate two example implementations of the programmable circuitry 2212 of FIG. 22, many other approaches are contemplated. For example, FPGA circuitry may include an on-board CPU, such as one or more of the example CPU 2420 of FIG. 23. Therefore, the programmable circuitry 2212 of FIG. 22 may additionally be implemented by combining at least the example microprocessor 2300 of FIG. 23 and the example FPGA circuitry 2400 of FIG. 24. In some such hybrid examples, one or more cores 2302 of FIG. 23 may execute a first portion of the machine readable instructions represented by the flowcharts of FIGS. 20 and 21 to perform first operation(s)/function(s), the FPGA circuitry 2400 of FIG. 24 may be configured and/or structured to perform second operation(s)/function(s) corresponding to a second portion of the machine readable instructions represented by the flowcharts of FIG. 20 and 21, and/or an ASIC may be configured and/or structured to perform third operation(s)/function(s) corresponding to a third portion of the machine readable instructions represented by the flowcharts of FIGS. 20 and 21.

It should be understood that some or all of the circuitry of FIG. 19 may, thus, be instantiated at the same or different times. For example, same and/or different portion(s) of the microprocessor 2300 of FIG. 23 may be programmed to execute portion(s) of machine-readable instructions at the same and/or different times. In some examples, same and/or different portion(s) of the FPGA circuitry 2400 of FIG. 24 may be configured and/or structured to perform operations/functions corresponding to portion(s) of machine-readable instructions at the same and/or different times.

In some examples, some or all of the circuitry of FIG. 19 may be instantiated, for example, in one or more threads executing concurrently and/or in series. For example, the microprocessor 2300 of FIG. 23 may execute machine readable instructions in one or more threads executing concurrently and/or in series. In some examples, the FPGA circuitry 2400 of FIG. 24 may be configured and/or structured to carry out operations/functions concurrently and/or in series. Moreover, in some examples, some or all of the circuitry of FIG. 19 may be implemented within one or more virtual machines and/or containers executing on the microprocessor 2300 of FIG. 23.

In some examples, the programmable circuitry 2212 of FIG. 22 may be in one or more packages. For example, the microprocessor 2300 of FIG. 23 and/or the FPGA circuitry 2400 of FIG. 24 may be in one or more packages. In some examples, an XPU may be implemented by the programmable circuitry 2212 of FIG. 22, which may be in one or more packages. For example, the XPU may include a CPU (e.g., the microprocessor 2300 of FIG. 23, the CPU 2420 of FIG. 24, etc.) in one package, a DSP (e.g., the DSP 2422 of FIG. 24) in another package, a GPU in yet another package, and an FPGA (e.g., the FPGA circuitry 2400 of FIG. 24) in still yet another package.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

Example methods, apparatus, systems, and articles of manufacture to enable accurate control of airspeed to mitigate the effects of payload configuration and/or orientation are disclosed herein. Further examples and combinations thereof include the following:
Example 1 includes an apparatus comprising interface circuitry communicatively coupled to a sensor carried by an aircraft, machine-readable instructions, and at least one processor circuit to be programmed by the machine-readable instructions to determine at least one of a configuration or an orientation of a payload, determine a pressure based on output from the sensor, determine an airspeed error based on: (i) the at least one of the configuration or the orientation, and (ii) the pressure, and determine an airspeed of the aircraft based on the airspeed error.
Example 2 includes the apparatus defined in example 1, wherein one or more of the at least one processor circuit is to control movement of the aircraft based on the determined airspeed.
Example 3 includes the apparatus as defined in any one or more of examples 1 or 2, wherein the pressure is a first pressure at the orientation, the orientation being a first orientation, and wherein one or more of the at least one processor circuit is to determine a second pressure corresponding to a second orientation of the payload, and determine the airspeed error based on the second pressure and global navigation satellite system (GNSS) data.
Example 4 includes the apparatus defined in any one or more of examples 1 to 3, wherein the pressure is determined based on measured outside air temperature and barometric pressure.
Example 5 includes the apparatus as defined in any one or more of examples 1 to 4, wherein the airspeed error corresponds to calibrated airspeed data associated with different orientations of the payload.
Example 6 includes the apparatus as defined in any one or more of examples 1 to 5, wherein the airspeed error corresponds to a database that relates the at least one of the configuration or the orientation of the payload to a corresponding pressure coefficient.
Example 7 includes the apparatus as defined in any one or more of examples 1 to 6, wherein the determination of at least one of the configuration or the orientation of the payload occurs in response to determining that a change in pressure distribution of the aircraft has exceeded threshold degree of change in pressure distribution.
Example 8 includes At least one (optionally non-transitory) machine-readable medium comprising machine-readable instructions to cause at least one processor circuit to at least determine at least one of a configuration or an orientation of a payload carried by an aircraft, determine a pressure based on output from a sensor of the aircraft, determine an airspeed error based on: (i) the at least one of the configuration or the orientation, and (ii) the pressure, and determine an airspeed of the aircraft based on the airspeed error.
Example 9 includes the at least one (optionally non-transitory) machine-readable medium as defined in example 8, wherein the machine-readable instructions are to cause one or more of the at least one processor circuit to guide movement of the aircraft based on the determined airspeed.
Example 10 includes the at least one (optionally non-transitory) machine-readable medium as defined in any one or more of examples 8 or 9, wherein the pressure is a first pressure at the orientation, the orientation being a first orientation, wherein the machine-readable instructions are to cause one or more of the at least one processor circuit to determine a second pressure corresponding to a second orientation of the payload, and calibrate the airspeed error based on a second pressure and global navigation satellite system (GNSS) data.
Example 11 includes the at least one (optionally non-transitory) machine-readable medium as defined in any one or more of examples 8 to 10, wherein the airspeed error is determined based on the orientation of the payload; and wherein the machine-readable instructions are to cause one or more of the at least one processor circuit to direct movement of the aircraft based on the determined airspeed to increase a range of the aircraft.
Example 12 includes the at least one (optionally non-transitory) machine-readable medium as defined in any one or more of examples 8 to 11, wherein the machine-readable instructions are to cause one or more of the at least one processor circuit to cause the aircraft to orbit a target based on the determined airspeed.
Example 13 includes the at least one (optionally non-transitory) machine-readable medium as defined in any one or more of examples 8 to 12, wherein the machine-readable instructions are to cause one or more of the at least one processor circuit to correct movement through the orbit based on at least one of the determined airspeed or the airspeed error.
Example 14 includes the at least one (optionally non-transitory) machine-readable medium as defined as defined in any one or more of examples 8 to 13, wherein the machine-readable instructions are to cause one or more of the at least one processor circuit to determine that the configuration of the payload has changed, and in response to the determination that the payload configuration has changed, cause the determination of the airspeed error.
Example 15 includes the at least one (optionally non-transitory) machine-readable medium as defined in any one or more of examples 8 to 14, wherein the machine-readable instructions are to cause one or more of the at least one processor circuit to generate at least one of a database or a table that relates the at least one of the configuration or the orientation to pressure measurements for determination of the airspeed error.
Example 16 includes a method comprising determining, by one or more of at least one processor circuit, at least one of a configuration or an orientation of a payload carried by an aircraft, determining, by one or more of the at least one processor circuit, a pressure based on output from a sensor of the aircraft, determining, by one or more of the at least one processor circuit, an airspeed error based on: (i) the at least one of the configuration or the orientation, and (ii) the pressure, determining, by one or more of the at least one processor circuit, an airspeed of the aircraft based on the airspeed error, and directing, by one or more of the at least one processor circuit, movement of the aircraft based on the determined airspeed.
Example 17 includes the method as defined in example 16, further including determining, by one or more of the at least one processor circuit, the airspeed error based on movement of the payload.
Example 18 includes the method as defined in any one or more of examples 16 or 17, further including causing, by one or more of the at least one processor circuit, the aircraft to orbit a target based on the determined airspeed.
Example 19 includes the method as defined in any one or more of examples 16 to 18, wherein the payload is a first payload, and wherein the airspeed error is determined in response to replacing the first payload with a second payload different from the first payload.
Example 20 includes the method as defined in any one or more of examples 16 to 19, further including correcting, by one or more of the at least one processor circuit, movement of the aircraft about an orbit of a target based on the airspeed error.

From the foregoing, it will be appreciated that example systems, apparatus, articles of manufacture, and methods have been disclosed that enable accurate determination of airspeed with varying payload orientations and/or configurations. Examples disclosed herein can effectively account for different aspects of a payload. Disclosed systems, apparatus, articles of manufacture, and methods improve the efficiency of using a computing device by reducing a need for closed form solutions that utilize significant amounts of computational resources by necessitating a relatively large amount of iterations. Disclosed systems, apparatus, articles of manufacture, and methods are accordingly directed to one or more improvement(s) in the operation of a machine such as a computer or other electronic and/or mechanical device.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry (2220) communicatively coupled to a sensor (108) carried by an aircraft (100);
machine-readable instructions (2232); and
at least one processor circuit (2212) to be programmed by the machine-readable instructions to:
determine at least one of a configuration or an orientation of a payload (112),
determine a pressure based on output from the sensor,
determine an airspeed error based on: (i) the at least one of the configuration or the orientation, and (ii) the pressure, and
determine an airspeed of the aircraft based on the airspeed error.

2. The apparatus as defined in claim 1, wherein one or more of the at least one processor circuit is to control movement of the aircraft based on the determined airspeed.

3. The apparatus as defined in claim 1 or claim 2, wherein the pressure is a first pressure at the orientation, the orientation being a first orientation, and wherein one or more of the at least one processor circuit is to:
determine a second pressure corresponding to a second orientation of the payload; and
determine the airspeed error based on the second pressure and global navigation satellite system (GNSS) data.

4. The apparatus as defined in any of claims 1 to 3, wherein the pressure is determined based on measured outside air temperature and barometric pressure.

5. The apparatus as defined in any of claims 1 to 4, wherein the airspeed error corresponds to calibrated airspeed data associated with different orientations of the payload.

6. The apparatus as defined in any of claims 1 to 5, wherein the airspeed error corresponds to a database that relates the at least one of the configuration or the orientation of the payload to a corresponding pressure coefficient.

7. The apparatus as defined in any of claims 1 to 6, wherein the determination of at least one of the configuration or the orientation of the payload occurs in response to determining that a change in pressure distribution of the aircraft has exceeded threshold degree of change in pressure distribution.

8. At least one machine-readable medium comprising machine-readable instructions to cause at least one processor circuit to at least:
determine at least one of a configuration or an orientation of a payload carried by an aircraft;
determine a pressure based on output from a sensor of the aircraft;
determine an airspeed error based on: (i) the at least one of the configuration or the orientation, and (ii) the pressure; and
determine an airspeed of the aircraft based on the airspeed error.

9. The at least one machine-readable medium as defined in claim 8, wherein the machine-readable instructions are to cause one or more of the at least one processor circuit to guide movement of the aircraft based on the determined airspeed.

10. The at least one machine-readable medium as defined in claim 8 or claim 9, wherein the pressure is a first pressure at the orientation, the orientation being a first orientation, wherein the machine-readable instructions are to cause one or more of the at least one processor circuit to:
determine a second pressure corresponding to a second orientation of the payload; and
calibrate the airspeed error based on a second pressure and global navigation satellite system (GNSS) data.

11. The at least one machine-readable medium as defined in any of claims 8 to 10, wherein the airspeed error is determined based on the orientation of the payload; and wherein the machine-readable instructions are to cause one or more of the at least one processor circuit to direct movement of the aircraft based on the determined airspeed to increase a range of the aircraft.

12. The at least one machine-readable medium as defined in any of claims 8 to 11, wherein the machine-readable instructions are to cause one or more of the at least one processor circuit to cause the aircraft to orbit a target (130) based on the determined airspeed, optionally, wherein the machine-readable instructions are to cause one or more of the at least one processor circuit to correct movement through the orbit based on at least one of the determined airspeed or the airspeed error.

13. The at least one machine-readable medium as defined in any of claims 8 to 12, wherein the machine-readable instructions are to cause one or more of the at least one processor circuit to:
determine that the configuration of the payload has changed; and
in response to the determination that the payload configuration has changed, cause the determination of the airspeed error, and/or,
wherein the machine-readable instructions are to cause one or more of the at least one processor circuit to generate at least one of a database or a table that relates the at least one of the configuration or the orientation to pressure measurements for determination of the airspeed error.

14. A method comprising:
determining, by one or more of at least one processor circuit, at least one of a configuration or an orientation of a payload carried by an aircraft;
determining, by one or more of the at least one processor circuit, a pressure based on output from a sensor of the aircraft;
determining, by one or more of the at least one processor circuit, an airspeed error based on: (i) the at least one of the configuration or the orientation, and (ii) the pressure;
determining, by one or more of the at least one processor circuit, an airspeed of the aircraft based on the airspeed error; and
directing, by one or more of the at least one processor circuit, movement of the aircraft based on the determined airspeed.

15. The method as defined in claim 16, further including determining, by one or more of the at least one processor circuit, the airspeed error based on movement of the payload, and/or,
further including causing, by one or more of the at least one processor circuit, the aircraft to orbit a target based on the determined airspeed, and/or,
wherein the payload is a first payload, and wherein the airspeed error is determined in response to replacing the first payload with a second payload (132) different from the first payload, and/or,
further including correcting, by one or more of the at least one processor circuit, movement of the aircraft about an orbit of a target based on the airspeed error.
